# EUROPÄISCHE PATENTANMELDUNG

(11) **EP 3 493 166 A1**
(43) Veröffentlichungstag der Anmeldung: **05.06.2019**
(21) Anmeldenummer: 18207493.0
(22) Anmeldetag: 21.11.2018
(51) Int. Cl.: G07C 9/00, G06Q 10/08, G06Q 50/28

(54) **VERFAHREN UND VORRICHTUNG FÜR EINE SENDUNGSAUFBEWAHRUNGSVORRICHTUNG**

(30) Priorität: 04.12.2017 DE 102017128775
(71) Anmelder: Deutsche Post AG, 53113 Bonn (DE)
(72) Erfinder: Tietz, Mareike, 50999 Köln (DE); Kasper, Christian, 50321 Brühl (DE); Frankemölle, Sven, 53227 Bonn (DE)
(74) Vertreter: Cohausz & Florack

(57) **Zusammenfassung**

Es wird unter anderem offenbart ein Verfahren für eine Sendungsaufbewahrungsvorrichtung, wobei die Sendungsaufbewahrungsvorrichtung (201) einen Aufbewahrungsraum (202) umfasst, und wobei in dem Aufbewahrungsraum (202) eine Mehrzahl von Sendungshalterungen (203-205) angeordnet ist, das Verfahren umfassend:
- Erhalten (301) einer Zugriffsberechtigungsinformation, wobei die Zugriffsberechtigungsinformation einen Benutzer (211) zum Zugriff auf eine oder mehrere der Sendungshalterungen (203-205) berechtigt,
- Bestimmen (302), ob ein Zugriff des Benutzers (211) auf eine oder mehrere der Sendungshalterungen (203-205) gewährt werden darf, zumindest teilweise in Abhängigkeit der erhaltenen Zugriffsberechtigungsinformation,
- nur dann, wenn bestimmt (303) wurde, dass ein Zugriff des Benutzers (211) auf eine oder mehrere der Sendungshalterungen (203-205) gewährt werden darf:
- Gewähren oder Bewirken des Gewährens (304) eines Zugangs für den Benutzer (211) zu dem Aufbewahrungsraum (202) und

- Bestimmen oder Bewirken des Bestimmens (305), ob der Benutzer (211) nur auf die eine oder mehreren der Sendungshalterungen (203-205) zugreift, für die die Zugriffsberechtigungsinformation den Benutzer (211) zum Zugriff berechtigt.

## Beschreibung

### Gebiet

Beispielhafte Ausführungsformen der Erfindung betreffen ein Verfahren für eine Sendungsaufbewahrungsvorrichtung.

### Hintergrund

Die Anzahl von Paketzustellungen steigt kontinuierlich, z.B. aufgrund von steigenden Internet- und Versandhandelbestellungen. Dabei sind häufig mehrere Zustellversuche aufgrund der Abwesenheit des jeweiligen Empfängers notwendig. Insgesamt ist die Durchführung von Paketzustellungen daher heute sehr personalintensiv und zeitaufwändig.

### Zusammenfassung einiger beispielhafter Ausführungsformen der Erfindung

Die vorliegende Erfindung hat sich daher unter anderem die Aufgabe gestellt, diese Probleme zu überwinden und unter anderem eine Möglichkeit für eine effizientere Möglichkeit zur Durchführung von Paketzustellungen bereitzustellen, zum Beispiel in Form des im Folgenden offenbarte Verfahren für eine Sendungsaufbewahrungsvorrichtung.

Gemäß der Erfindung wird ein Verfahren für eine Sendungsaufbewahrungsvorrichtung offenbart, wobei die Sendungsaufbewahrungsvorrichtung einen Aufbewahrungsraum umfasst, wobei in dem Aufbewahrungsraum eine Mehrzahl von Sendungshalterungen angeordnet ist und wobei das Verfahren umfasst:
- Erhalten einer Zugriffsberechtigungsinformation, wobei die Zugriffsberechtigungsinformation einen Benutzer zum Zugriff auf eine oder mehrere der Sendungshalterungen berechtigt,
- Bestimmen, ob ein Zugriff des Benutzers auf eine oder mehrere der Sendungshalterungen gewährt werden darf, zumindest teilweise in Abhängigkeit der erhaltenen Zugriffsberechtigungsinformation,
- nur dann, wenn bestimmt wurde, dass ein Zugriff des Benutzers auf eine oder mehrere der Sendungshalterungen gewährt werden darf:
   - Gewähren oder Bewirken des Gewährens eines Zugangs für den Benutzer zu dem Aufbewahrungsraum und
   - Bestimmen oder Bewirken des Bestimmens, ob der Benutzer nur auf die eine oder mehreren der Sendungshalterungen zugreift, für die die Zugriffsberechtigungsinformation den Benutzer zum Zugriff berechtigt.

Zum Beispiel wird das offenbarte Verfahren zumindest teilweise von einer Steuervorrichtung und/oder von jeweiligen Mitteln der Steuervorrichtung ausgeführt, beispielsweise der im Folgenden offenbarten Steuervorrichtung.

Gemäß der Erfindung wird ferner eine Steuervorrichtung offenbart, wobei die Steuervorrichtung Mittel eingerichtet zur Ausführung des erfindungsgemäßen Verfahrens oder jeweilige Mittel zur Ausführung der Schritte des erfindungsgemäßen Verfahrens umfasst.

Dabei können verschiedene Schritte optional von verschiedenen Mitteln ausgeführt werden.

Die Mittel der erfindungsgemäßen Steuervorrichtung können Hardware- und/oder Software-Komponenten umfassen.

Die Mittel können beispielsweise mindestens einen Speicher mit Programmanweisungen eines Computerprogramms (z.B. des erfindungsgemäßen Computerprogramms) und mindestens einen Prozessor ausgebildet zum Ausführen von Programmanweisungen aus dem mindestens einen Speicher umfassen. Dementsprechend soll gemäß der Erfindung auch eine Steuervorrichtung als offenbart verstanden werden, die zumindest einen Prozessor und zumindest einen Speicher mit Programmanweisungen umfasst, wobei der zumindest eine Speicher und die Programmanweisungen eingerichtet sind, gemeinsam mit dem zumindest einen Prozessor, die Steuervorrichtung zu veranlassen, das erfindungsgemäße Verfahren auszuführen.

Alternativ oder zusätzlich können die Mittel ferner eine oder mehrere Kommunikationsschnittstellen (z.B. eine oder mehrere drahtlose und/oder drahtgebundene Netzwerkadapter) und/oder eine oder mehrere Benutzerschnittstellen umfassen.

Zum Beispiel ist die Steuervorrichtung ein Server (z.B. ein Backendserver wie ein Backendserver eines Zustelldienstes). Es versteht sich, dass ein solcher Server sowohl ein physikalischer Server (d.h. ein Server mit Hardware- und/oder Software-Komponenten) als auch ein virtueller Server sein kann. Dabei soll unter einem virtuellen Server beispielsweise eine in Form einer durch Hardware- und/oder Software-Komponenten eines oder mehrerer physikalischer Server (z.B. mehrere Server einer sogenannten Servercloud) bereitgestellte virtuelle Maschine verstanden werden.

Eine Benutzerschnittstelle ist beispielsweise eine Tastatur, eine Maus, eine Kamera, ein Bildschirm, ein berührungsempfindlicher Bildschirm, ein Lautsprecher, ein Mikrofon und/oder ein biometrischer Sensor wie ein Fingerabdrucksensor und/oder ein Irisscanner. Eine Benutzerschnittstelle ist beispielsweise eingerichtet zum Erfassen von Informationen in Form einer Benutzereingabe (z.B. als Tastatur- oder Mauseingabe und/oder als Spracheingabe und/oder als Geste) und/oder einer Eingabe eines biometrischen Merkmals (z.B. einem Fingerabdruck und/oder einem Irisbild) und/oder zum Ausgeben von Informationen in Form einer beispielsweise akustischen und/oder optischen Benutzerausgabe (z.B. als Sprachausgabe und/oder als Textausgabe).

Eine Kommunikationsschnittstelle ist beispielsweise eingerichtet zum Senden und/oder Empfangen von Informationen. Eine Kommunikationsschnittstelle kann beispielsweise eine drahtlose und/oder drahtgebundene Kommunikationsschnittstelle sein. Eine drahtlose Kommunikationsschnittstelle ist beispielweise eingerichtet zum Senden und/oder Empfangen von Informationen gemäß einer drahtlosen Kommunikationstechnik, und eine drahtgebundene Kommunikationsschnittstelle ist beispielweise eingerichtet zum Senden und/oder Empfangen von Informationen gemäß einer drahtgebundenen Kommunikationstechnik.

Ein Beispiel für eine drahtlose Kommunikationstechnik ist eine lokale Funknetztechnik wie Radio Frequency Identification (RFID) und/oder Near Field Communication (NFC) und/oder Bluetooth (z.B. Bluetooth Version 2.1 und/oder 4.0) und/oder Wireless Local Area Network (WLAN). RFID und NFC- sind beispielsweise gemäß den ISO-Standards 18000, 11784/11785 und dem ISO/IEC-Standard 14443-A und 15693 spezifiziert. Die Bluetooth-Spezifikationen sind derzeit im Internet unter www.bluetooth.org erhältlich. WLAN ist zum Beispiel in den Standards der IEEE-802.11-Familie spezifiziert. Ein weiteres Beispiel für eine drahtlose Kommunikationstechnik ist eine überregionale Funknetztechnik wie beispielsweise ein Low Power Wide Area Network (LPWAN) und/oder eine Mobilfunktechnik, zum Beispiel Global System for Mobile Communications (GSM) und/oder Universal Mobile Telecommunications System (UMTS) und/oder Long Term Evolution (LTE). Die GSM-, UMTS- und LTE-Spezifikationen werden von dem 3rd Generation Partnership Project (3GPP) gepflegt und entwickelt und sind derzeit im Internet unter www.3gpp.com erhältlich. Ein Beispiel für eine LPWAN Spezifikation ist die von der LoRa Alliance entwickelte und gepflegte LoRa-Standard (www. lora-alliance.org) oder die von dem Unternehmen SIGFOX entwickelte SIGFOX Funknetzwerktechnologie.

Ein Beispiel für eine drahtgebundene Kommunikationstechnik ist eine lokale Netzwerktechnik wie Ethernet und/oder Universal Serial Bus (USB, z.B. USB Version 2.0 und/oder 3.0). Ethernet ist zum Beispiel in den Standards der IEEE-802.3-Familie spezifiziert. Die USB-Spezifikationen sind im Internet derzeit unter anderem unter www.usb.org erhältlich. Ein weiteres Beispiel für eine drahtgebundene Kommunikationstechnik sind überregionale Übertragungsstandards wie Integrated Services Digital Network (ISDN) und/oder Digital Subscriber Line (DSL). Die DSL-Spezifikationen wurden zumindest teilweise von der ITU-T spezifiziert (z.B. ADSL, ADSL+, VDSL1 und VDSL2) und sind im Internet derzeit unter anderem unter www.itu.int erhältlich. ISDN wurde ebenfalls von der ITU-T spezifiziert.

Es versteht sich, dass die Steuervorrichtung auch andere nicht aufgeführte Mittel umfassen kann.

Die erfindungsgemäße Steuervorrichtung ist beispielsweise eine Steuervorrichtung für eine Sendungsaufbewahrungsvorrichtung, zum Beispiel eine Steuervorrichtung zum zumindest teilweise Steuern der Sendungsaufbewahrungsvorrichtung.

Gemäß der Erfindung wird ferner ein System offenbart, wobei das System umfasst:
- eine Sendungsaufbewahrungsvorrichtung, wobei die Sendungsaufbewahrungsvorrichtung einen Aufbewahrungsraum umfasst, und wobei in dem Aufbewahrungsraum eine Mehrzahl von Sendungshalterungen angeordnet sind, und
- die offenbarte Steuervorrichtung.

Gemäß der Erfindung wird ferner ein Computerprogramm offenbart, wobei das Computerprogramm Programmanweisungen umfasst, die dazu ausgebildet sind, bei Ausführung durch mindestens einen Prozessor eine Vorrichtung (z.B. die offenbarte Steuervorrichtung) zu veranlassen, das offenbarte Verfahren auszuführen.

Das offenbarte Computerprogramm ist beispielsweise auf einem computerlesbaren Speichermedium enthalten und/oder gespeichert. Unter einem computerlesbaren Speichermedium soll beispielsweise ein physisches und/oder berührbares Speichermedium verstanden werden.

Im Folgenden werden die Merkmale des offenbarten Verfahrens, der offenbarten Steuervorrichtung, des offenbarten Systems und des offenbarten Computerprogramms - teilweise beispielhaft - beschrieben.

Als Sendung kann beispielsweise ein Packstück, ein Stückgut, eine Paketsendung (z.B. ein Paket) und/oder eine Briefsendung (z.B. ein Brief) verstanden werden. Es versteht sich, dass eine Sendung eine Flüssigkeit, ein Gas oder ein Schüttgut umfassen oder dadurch gebildet sein kann.

Eine Sendungsaufbewahrungsvorrichtung ist eine Vorrichtung zur Aufbewahrung einer oder mehrerer Sendungen. Beispielsweise können eine oder mehrere Sendungen in einer solchen Sendungsaufbewahrungsvorrichtung (z.B. in einer oder mehreren darin angeordneten Sendungshalterungen) durch einen Zusteller hinterlegt und dort solange aufbewahrt werden, bis sie durch den Empfänger der Sendungen abgeholt werden. Ferner können auch eine oder mehrere Sendungen durch einen Absender der Sendungen in einer solchen Sendungsaufbewahrungsvorrichtung (z.B. in einer oder mehreren darin angeordneten Sendungshalterungen) zur Abholung durch einen Zusteller hinterlegt werden. Sowohl der Zusteller als auch der Empfänger bzw. der Absender sind in diesen Beispielen Benutzer der Sendungsaufbewahrungsvorrichtung. Ein Zusteller ist beispielsweise ein Mitarbeiter eines Zustelldienstes wie ein Brief- und Paketzusteller, Paketbote, Postbote oder Briefträger. Dabei soll unter einem Zustelldienst beispielsweise ein Zustellunternehmen wie ein Post- und/oder Logistikunternehmen verstanden werden, das Sendungen befördert und zustellt. Zum Beispiel wird die Sendungsaufbewahrungsvorrichtung einem Zustelldienst zur Aufbewahrung einer oder mehrerer Sendungen im Rahmen der Zustellung und Beförderung von Sendungen zur Verfügung gestellt (z.B. durch einen Benutzer der Sendungsaufbewahrungsvorrichtung). Es versteht sich, dass die Sendungsaufbewahrungsvorrichtung alternativ auch eine Sendungsaufbewahrungsvorrichtung des Zustelldienstes sein kann.

Unter einer Sendungsaufbewahrungsvorrichtung soll eine Vorrichtung verstanden werden, die einen Aufbewahrungsraum umfasst. Dabei ist der Aufbewahrungsraum beispielsweise ein von der Vorrichtung zumindest teilweise umschlossener Raum und/oder Bereich. Zum Beispiel ist der Aufbewahrungsraum nicht frei zugänglich. Beispielsweise ist der Aufbewahrungsraum zumindest (z.B. nur) durch ein Verschlussmittel (z.B. eine Tür und/oder Klappe) zum Verschließen einer Öffnung der Sendungsaufbewahrungsvorrichtung zugänglich.

Ein Beispiel für eine Sendungsaufbewahrungsvorrichtung ist ein Gebäude und/oder ein Teil eines Gebäudes, wie beispielsweise eine Garage oder ein Gartenhaus oder ein Geräteschuppen (z.B. wird das Gebäude und/oder der Teil des Gebäudes einem Zustelldienst zur Aufbewahrung einer oder mehrerer Sendungen im Rahmen der Zustellung und Beförderung von Sendungen durch den Eigentümer des Gebäudes zur Verfügung gestellt). Der Aufbewahrungsraum kann dementsprechend ein Teil dieses Gebäudes sein. Zum Beispiel ist der Aufbewahrungsraum ein Raum dieses Gebäudes und/oder ein innerhalb dieses Gebäudes befindlicher Raum (z.B. ein von dem Gebäude umschlossener Raum). Der Raum ist beispielsweise nur durch eine Tür des Gebäudes zugänglich. Es versteht sich, dass die Erfindung nicht auf dieses Beispiel beschränkt ist. Weitere Beispiele für eine Sendungsaufbewahrungsvorrichtung sind ein umzäunter Außenbereich, wobei der umzäunte Bereich durch eine Tür zugänglich ist und als Aufbewahrungsraum verstanden werden soll, oder eine Aufbewahrungsbox, wobei der Innenraum der Aufbewahrungsbox durch eine Klappe zugänglich ist und als Aufbewahrungsraum verstanden werden soll.

Vorzugsweise ist die Sendungsaufbewahrungsvorrichtung unbeaufsichtigt. Dass die Sendungsaufbewahrungsvorrichtung unbeaufsichtigt ist, soll beispielsweise derart verstanden werden, dass die Sendungsaufbewahrungsvorrichtung zumindest nicht durchgehend bewacht (d.h. von einer oder mehreren Personen, z.B. einem Benutzer bewacht) wird, um einen unberechtigten Zugriff auf die darin aufbewahrten Sendungen (z.B. die Sendungshalterungen und davon gehaltene Sendungen) zu verhindern.

Eine Sendungshalterung ist beispielsweise eine Vorrichtung zum Halten einer Sendung. Dabei soll eine Sendung unter anderem als gehalten verstanden werden, wenn sie (i) auf der Sendungshalterung liegt und durch die Sendungshalterung gestützt wird, (ii) durch die Sendungshalterung zumindest teilweise aufgenommen ist und/oder (iii) kraftschlüssig (z.B. in Form einer Klemmverbindung) mit der Sendungshalterung verbunden ist. Eine solche Sendungshalterung zum Halten einer Sendung kann zumindest teilweise als Klemmvorrichtung, als Aufnahmevorrichtung (z.B. in Form einer Aufnahmebox und/oder eines Aufhahmefachs) und/oder als Ablagevorrichtung (z.B. in Form eine Regalbretts und/oder Regalfachs) gebildet sein. Es versteht sich, dass die Erfindung nicht auf diese Beispiele beschränkt ist und die Sendungshalterung auch anders gebildet sein kann.

Unter einer Mehrzahl von Sendungshalterungen sollen mehrere Sendungshalterungen (d.h. zumindest zwei Sendungshalterungen) verstanden werden. Dementsprechend sind in dem Aufbewahrungsraum der Sendungsaufbewahrungsvorrichtung zumindest zwei Sendungshalterungen angeordnet.

Eine Sendungshalterung soll beispielsweise als in dem Aufbewahrungsraum angeordnet verstanden werden, wenn sich die Sendungshalterung in dem Aufbewahrungsraum befindet. Zum Beispiel soll eine Sendungshalterung als in dem Aufbewahrungsraum angeordnet verstanden werden, wenn die Sendungshalterung in dem Aufbewahrungsraum befestigt ist. Wenn die Sendungsaufbewahrungsvorrichtung ein Gebäude und/oder ein Teil eines Gebäudes ist, kann eine Sendungshalterung beispielsweise in dem Aufbewahrungsraum angeordnet werden, indem die Sendungshalterung an einer den Aufbewahrungsraum umschließenden Wand befestigt wird. Eine solche Befestigung ist vorzugsweise eine dauerhafte (d.h. eine nicht zerstörungsfrei-lösbare) Befestigung wie eine Klebeverbindung, eine Schweißverbindung, eine Schraubdübelverbindung und/oder eine Nietverbindung. Dies gilt entsprechend auch für andere in dem Aufbewahrungsraum angeordnete Mittel und/oder Vorrichtungen (z.B. einen oder mehrere in dem Aufbewahrungsraum angeordnete Sensoren und/oder Signalgeber).

Die Zugriffsberechtigungsinformation kann beispielsweise zusammen mit einer Zugangsanforderungsinformation, mit der Zugang zu dem Aufbewahrungsraum der Sendungsaufbewahrungsvorrichtung angefordert wird, erhalten werden.

Die Zugriffsberechtigungsinformation (z.B. zusammen mit der Zugangsanforderungsinformation) kann beispielsweise durch das Erfassen einer Benutzereingabe erhalten werden. Eine solche Benutzereingabe kann beispielsweise durch eine Benutzerschnittstelle der Steuervorrichtung und/oder eine mit der Steuervorrichtung verbundene Benutzerschnittstelle erfolgen. Ferner kann die Zugriffsberechtigungsinformation (z.B. zusammen mit der Zugangsanforderungsinformation) auch empfangen und dadurch erhalten werden. Zum Beispiel kann die Zugriffsberechtigungsinformation durch eine Kommunikationsschnittstelle der Steuervorrichtung empfangen werden. Es versteht sich, dass auch ein Teil der Zugriffsberechtigungsinformation durch das Erfassen einer Benutzereingabe und ein weiterer Teil der Zugriffsberechtigungsinformation durch das Empfangen erhalten werden kann. Zum Beispiel kann vorgesehen sein, dass ein Code und/oder ein Passwort und/oder eine persönliche Identifizierungsnummer (PIN) und/oder eine biometrisches Merkmal (z.B. in Form eines Fingerabdrucks und/oder eines Irisbilds) eines Benutzers als Benutzereingabe erfasst und weitere Informationen beispielsweise von einer Benutzervorrichtung (z.B. einer tragbaren Benutzervorrichtung) des Benutzers empfangen werden. Dies ist beispielsweise vorteilhaft um eine 2-Faktor Authentifizierung zu ermöglichen.

Der durch die Zugriffsberechtigungsinformation berechtigte Benutzer ist beispielsweise ein Benutzer der Sendungsaufbewahrungsvorrichtung wie ein Zusteller und/oder ein Empfänger und/oder ein Absender einer Sendung. Die Zugriffsberechtigungsinformation enthält und/oder repräsentiert zum Beispiel eine oder mehrere Zugriffsberechtigungsparameter. Die Zugangsberechtigungsparameter dienen beispielsweise zum Überprüfen und/oder zum Definieren der Berechtigung des Benutzers zum Zugriff auf eine oder mehrere der Sendungshalterungen. Beispiele für solche Zugangsberechtigungsparameter sind: (i) eine (insbesondere eindeutige) Kennung für die Sendungsaufbewahrungsvorrichtung, (ii) eine (insbesondere eindeutige) Kennung für eine oder mehrere Sendungshalterungen der Sendungshalterungen und/oder eine oder mehreren davon gehaltenen Sendungen, (iii) eine (insbesondere eindeutige) Kennung für die Zugriffsberechtigungsinformation selbst, zeitliche Gültigkeitsinformationen (z.B. in Form eines "Nicht-Vor-Datums", eines "Nicht-Nach-Datums", einer "Startzeit des Tages" und einer "Endzeit des Tages", die angeben, innerhalb welcher Tage und innerhalb welcher Tageszeit der Benutzer zum Zugriff berechtigt ist, beispielsweise vom 27.3.2018 00:00:00 Uhr bis zum 28.3.2018 23:59:59 Uhr), (iv) eine (insbesondere eindeutige) Kennung des Benutzers (z.B. in Form einer Benutzernummer und/oder eines Benutzernamens und/oder eines Codes und/oder Passwortes und/oder PIN), (v) eine Obergrenze der erlaubten Nutzungen der Zugriffsberechtigungsinformation, um Zugang zu erhalten (z.B. nur einmal), (vi) einer Information, in welchem Ausmaß der Benutzer zum Zugriff berechtigt ist (also beispielsweise, ob der Benutzer zum Zugriff auf alle Sendungshalterungen oder nur auf eine oder mehrere der Sendungshalterungen berechtigt ist) und (vii) eine digitale Signatur zum Überprüfen der vertrauenswürdigen Herkunft der Zugriffsberechtigungsinformation sowie der Integrität der Zugriffsberechtigungsinformation. Es versteht sich, dass die Erfindung nicht auf diese Beispiele beschränkt ist und die Zugriffsberechtigungsinformation auch andere und/oder eine beliebige Kombination dieser Zugangsberechtigungsparameter enthalten und/oder repräsentieren kann.

Unter Bestimmen, ob ein Zugriff des Benutzers auf eine oder mehrere der Sendungshalterungen gewährt werden darf, zumindest teilweise in Abhängigkeit der erhaltenen Zugriffsberechtigungsinformation, soll beispielsweise verstanden werden, dass geprüft wird, ob die erhaltene Zugriffsberechtigungsinformation einen Benutzer (z.B. den Benutzer, dessen Kennung durch die Zugriffsberechtigungsinformation repräsentiert wird oder darin enthalten ist) zum Zugriff auf eine oder mehrere der Sendungshalterungen berechtigt. Das Prüfen kann beispielsweise zumindest teilweise abhängig von einer Sendungsaufbewahrungs- und/oder Benutzerdatenbank erfolgen. Die Sendungsaufbewahrungs- und/oder Benutzerdatenbank ist beispielsweise in einem Speicher der Steuervorrichtung gespeichert. Alternativ kann auch vorgesehen sein, dass die Sendungsaufbewahrungs- und/oder Benutzerdatenbank in einem Speicher separat von der Steuervorrichtung gespeichert sind. Zum Beispiel enthält und/oder repräsentiert die Sendungsaufbewahrungs- und/oder Benutzerdatenbank Prüfinformationen wie Sendungsaufbewahrungs- und/oder Benutzerinformationen zum Prüfen, ob die erhaltene Zugriffsberechtigungsinformation einen Benutzer (z.B. den Benutzer, dessen Kennung durch die Zugriffsberechtigungsinformation repräsentiert wird oder darin enthalten ist) zum Zugriff auf eine oder mehrere der Sendungshalterungen berechtigt (z.B. in Form eines Sendungsaufbewahrungs- und/oder Benutzerdatenbankeintrags, der eine durch die Zugriffsberechtigungsinformation repräsentierte und/oder darin enthaltenen Information mit der Kennung einer der Sendungshalterungen verknüpft). Es versteht sich, dass das Prüfen auch zumindest teilweise unabhängig von einer solchen Sendungsaufbewahrungs- und/oder Benutzerdatenbank erfolgen kann.

Das Gewähren eines Zugangs für den Benutzer zu dem Aufbewahrungsraum kann beispielsweise durch das Entriegeln und/oder Öffnen eines Verschlussmittels (z.B. eine Tür und/oder Klappe) zum Verschließen einer Öffnung der Sendungsaufbewahrungsvorrichtung gewährt werden. Unter dem Bewirken des Gewährens des Zugangs für den Benutzer zu dem Aufbewahrungsraum soll beispielsweise verstanden werden, dass das Gewähren des Zugangs gesteuert wird, beispielsweise indem das Verschlussmittel (z.B. eine Tür und/oder Klappe) zum Verschließen einer Öffnung der Sendungsaufbewahrungsvorrichtung derart angesteuert wird, dass es sich entriegelt und/oder öffnet. Das Verschlussmittel (z.B. eine Tür und/oder Klappe) weist beispielsweise ein ansteuerbares Entriegelungsmittel (z.B. einen ansteuerbaren Entriegelungsmechanismus wie ein elektronisches Schloss) zum Entriegeln des Verschlussmittels und/oder ein ansteuerbares Öffnungsmittel (z.B. einen ansteuerbaren Öffnungsmechanismus wie einen Türöffner und/oder Türsummer) zum Öffnen des Verschlussmittels auf. Unter einem solchen Ansteuern soll beispielsweise verstanden werden, dass eine Steuerinformation an das Verschlussmittel (z.B. an ein Entriegelungsmittel und/oder ein Öffnungsmittel des Verschlussmittels, z.B. über eine Kommunikationsschnittstelle des Verschlussmittels) gesendet wird (z.B. durch eine Kommunikationsschnittstelle der Steuervorrichtung), die eingerichtet ist, das Verschlussmittel (z.B. ein Entriegelungsmittel und/oder ein Öffnungsmittel des Verschlussmittels) zu veranlassen, dass es sich entriegelt und/oder öffnet.

Das Bestimmen, ob der Benutzer nur auf die eine oder mehrere der Sendungshalterungen zugreift, für die die Zugriffsberechtigungsinformation den Benutzer zum Zugriff berechtigt, umfasst beispielsweise das Überwachen, ob der Benutzer auf eine oder mehrere der Sendungshalterungen zugreift, für die die Zugriffsberechtigungsinformation den Benutzer nicht zum Zugriff berechtigen. Dies kann beispielsweise zumindest teilweise abhängig von Sensorinformationen erfolgen, wie unten im Detail offenbart.

Unter dem Bewirken des Bestimmens, ob der Benutzer nur auf die eine oder mehrere der Sendungshalterungen zugreift, für die die Zugriffsberechtigungsinformation den Benutzer zum Zugriff berechtigt, soll beispielsweise verstanden werden, dass die Sendungshalterungen veranlasst werden, zu überwachen, ob der Benutzer auf eine oder mehrere der Sendungshalterungen zugreift, für die die Zugriffsberechtigungsinformation den Benutzer nicht zum Zugriff berechtigen. Zum Beispiel wird zumindest an jede der Sendungshalterungen, für die die Zugriffsberechtigungsinformation den Benutzer nicht zum Zugriff berechtigt, eine Steuerinformation gesendet, die eingerichtet ist, die Sendungshalterung zu veranlassen, zu überwachen, ob der Benutzer auf sie zugreift. Alternativ kann auch vorgesehen sein, dass jede der Sendungshalterungen kontinuierlich überwacht, ob ein Benutzer auf sie zugreift. In diesem Fall kann beispielweise jeder der Sendungshalterungen, für die die Zugriffsberechtigungsinformation den Benutzer zum Zugriff berechtigt, eine Steuerinformation gesendet werden, die eingerichtet ist, die jeweilige Sendungshalterung zu veranlassen, das Überwachen zu unterbrechen (z.B. bis der Benutzer eine Sendung in der jeweiligen Sendungshalterung hinterlegt oder daraus entnommen hat).

Dies ist beispielsweise vorteilhaft, um in einem Aufbewahrungsraum einer Sendungsaufbewahrungsvorrichtung zur Abholung hinterlegte Sendungen zu überwachen und somit eine ordnungsgemäße Abholung (z.B. durch den Empfänger) einer solchen Sendung sicherzustellen bzw. einen unberechtigten Zugriff auf eine solche Sendung erkennen und möglichst unterbinden zu können. Hierdurch wird eine sichere Zustellung einer Sendung ermöglicht, ohne dass der Empfänger der jeweiligen Sendung anwesend sein muss, so dass es auf die Anwesenheit des Empfängers für die Zustellung nicht ankommt und somit die Zahl von Zustellversuchen verringert und die Effizienz der Zustellung gesteigert werden kann,

Weitere Vorteile der offenbarten Erfindung werden nachfolgend anhand beispielhafter Ausführungsformen des offenbarten Verfahrens, der offenbarten Steuervorrichtung, des offenbarten Systems und des offenbarten Computerprogramms beschrieben.

In einer beispielhaften Ausführungsform der Erfindung wird die Zugriffsberechtigungsinformation von einer tragbaren Benutzervorrichtung empfangen.

Wie oben offenbart, kann die Zugriffsberechtigungsinformation empfangen und dadurch erhalten werden. Zum Beispiel kann die Zugriffsberechtigungsinformation durch eine Kommunikationsschnittstelle der Steuervorrichtung empfangen werden.

Zum Beispiel kann die Zugriffsberechtigungsinformation von einer tragbaren Benutzervorrichtung eines Benutzers der Sendungsaufbewahrungsvorrichtung empfangen werden. Ein solcher Benutzer der Sendungsaufbewahrungsvorrichtung ist, wie oben offenbart, beispielsweise ein Zusteller und/oder ein Empfänger und/oder ein Absender einer Sendung. Die Zugriffsberechtigungsinformation kann beispielsweise den Benutzer der Benutzervorrichtung zum Zugriff auf eine oder mehrere der Sendungshalterungen berechtigen.

Beispiele für eine tragbare Benutzervorrichtung sind ein Mobiltelefon (z.B. ein Smartphone), ein Wearable Computer (z.B. eine Smartwatch oder ein Smartband), ein Tabletcomputer, ein Persönlicher Digitaler Assisstent (PDA), ein tragbares Medienabspielgerät, ein tragbares Navigationsgerät oder ein "Tag" (z.B. ein RFID- oder NFC-Tag wie ein "Tag" der MiFARE-Familie von NXP). Ferner kann eine tragbare Benutzervorrichtung beispielsweise auch ein Zustellergerät eines Zustellers wie ein Handscanner (z.B. der Honeywell LXE Tecton MX7) sein.

In einer beispielhaften Ausführungsform der Erfindung ist die Zugriffsberechtigungsinformation zumindest eine der folgenden Zugriffsberechtigungsinformationen:
- eine Zugriffsberechtigungsinformation zur Abholung zumindest einer Sendung,
- eine Zugriffsberechtigungsinformation zur Hinterlegung zumindest einer Sendung.

Es versteht sich, dass die Zugriffsberechtigungsinformation auch eine Zugriffsberechtigungsinformation zur Abholung mehrerer Sendungen und/oder eine Zugriffsberechtigungsinformation zur Hinterlegung mehrerer Sendungen sein kann. Im Folgenden wird diese Ausführungsform lediglich aus Gründen der besseren Nachvollziehbarkeit für die Abholung und/oder Hinterlegung einer einzelnen Sendung beispielhaft beschrieben. Diese Offenbarung soll entsprechend aber auch für die Abholung und/oder Hinterlegung mehrerer Sendungen gelten.

Eine Zugriffsberechtigungsinformation zur Abholung einer Sendung berechtigt den Benutzer beispielsweise nur zum Zugriff auf die Sendungshalterung, die diese Sendung hält.

Zum Beispiel enthält und/oder repräsentiert eine solche Zugriffsberechtigungsinformation zur Abholung einer Sendung eine (insbesondere eindeutige) Kennung der Sendung. Beim Bestimmen, ob ein Zugriff des Benutzers auf eine oder mehrere der Sendungshalterungen gewährt werden darf, wird dementsprechend beispielsweise geprüft, ob eine der in dem Aufbewahrungsraum angeordneten Sendungshalterungen eine Sendung mit dieser (insbesondere eindeutigen) Kennung hält. Wenn das Prüfen ergibt, dass eine der in dem Aufbewahrungsraum angeordneten Sendungshalterungen eine Sendung mit dieser (insbesondere eindeutigen) Kennung hält, kann beispielsweise bestimmt werden, dass ein Zugriff des Benutzers auf die Sendungshalterung, die die Sendung mit dieser (insbesondere eindeutigen) Kennung hält, gewährt werden darf.

Es versteht sich, dass die Zugriffsberechtigungsinformation beispielsweise alternativ oder zusätzlich auch eine (insbesondere eindeutige) Kennung der Sendungshalterung, die die Sendung hält, enthalten oder repräsentieren kann, so dass beim Bestimmen, ob ein Zugriff des Benutzers auf eine oder mehrere der Sendungshalterungen gewährt werden darf, beispielsweise geprüft wird, ob eine der in dem Aufbewahrungsraum angeordneten Sendungshalterungen eine Sendungshalterung mit dieser (insbesondere eindeutigen) Kennung ist. Wenn das Prüfen ergibt, dass eine der in dem Aufbewahrungsraum angeordneten Sendungshalterungen die Sendungshalterung mit dieser (insbesondere eindeutigen) Kennung ist, kann beispielsweise bestimmt werden, dass ein Zugriff des Benutzers auf die Sendungshalterung mit dieser (insbesondere eindeutigen) Kennung gewährt werden darf.

Eine Zugriffsberechtigungsinformation zur Hinterlegung einer Sendung berechtigt den Benutzer (im Gegensatz zu einer Zugriffsberechtigungsinformation zur Abholung einer Sendung) beispielsweise nur zum Zugriff auf zumindest eine freie Sendungshalterung der Sendungshalterungen.

Zum Beispiel enthält und/oder repräsentiert eine solche Zugriffsberechtigungsinformation zur Hinterlegung einer Sendung eine (insbesondere eindeutige) Kennung zumindest einer freien Sendungshalterung der Sendungshalterungen. Beim Bestimmen, ob ein Zugriff des Benutzers auf eine oder mehrere der Sendungshalterungen gewährt werden darf, wird dementsprechend beispielsweise geprüft, ob eine der in dem Aufbewahrungsraum angeordneten Sendungshalterungen eine Sendungshalterung mit dieser (insbesondere eindeutigen) Kennung ist. In diesem Beispiel kann beispielsweise bestimmt werden, dass ein Zugriff des Benutzers auf die Sendungshalterung mit dieser (insbesondere eindeutigen) Kennung gewährt werden darf, wenn das Prüfen ergibt, dass eine der in dem Aufbewahrungsraum angeordneten Sendungshalterungen die Sendungshalterung mit dieser (insbesondere eindeutigen) Kennung ist.

Es versteht sich, dass die Zugriffsberechtigungsinformation alternativ oder zusätzlich auch eine Information enthalten kann, dass der Benutzer nur zum Zugriff auf zumindest eine freie Sendungshalterung der Sendungshalterungen berechtigt ist, so dass beim Bestimmen, ob ein Zugriff des Benutzers auf eine oder mehrere der Sendungshalterungen gewährt werden darf, beispielsweise geprüft wird, ob zumindest eine der in dem Aufbewahrungsraum angeordneten Sendungshalterungen frei ist (d.h. keine Sendung hält). Wenn das Prüfen ergibt, dass zumindest eine der in dem Aufbewahrungsraum angeordneten Sendungshalterungen frei ist, kann beispielsweise bestimmt werden, dass ein Zugriff des Benutzers auf die zumindest eine freie Sendungshalterung gewährt werden darf.

Wie oben offenbart, kann das Prüfen beispielsweise zumindest teilweise abhängig von einer Sendungsaufbewahrungsdatenbank erfolgen. Dabei kann die Sendungsaufbewahrungsdatenbank oder ein Teil der Sendungsaufbewahrungsdatenbank beispielsweise lokal (z.B. in einem Speicher der Steuervorrichtung gespeichert sein). Alternativ oder zusätzliche kann auch vorgesehen sein, dass die Sendungsaufbewahrungsdatenbank oder ein Teil der Sendungsaufbewahrungsdatenbank separat (z.B. in einem Speicher separat von der Steuervorrichtung) gespeichert ist. Zum Beispiel enthält und/oder repräsentiert die Sendungsaufbewahrungsdatenbank Sendungsaufbewahrungsinformationen zum Prüfen, ob eine Sendung mit einer (insbesondere eindeutigen) Kennung von einer Sendungshalterung der Sendungshalterungen gehalten wird (z.B. in Form eines Sendungsaufbewahrungsdatenbankeintrags, der die Kennung der Sendung mit der Kennung einer der Sendungshalterungen verknüpft) und/oder ob eine Sendungshalterung mit einer (insbesondere eindeutigen) Kennung in dem Aufbewahrungsraum der Sendungsaufbewahrungsvorrichtung angeordnet ist (z.B. in Form eines Sendungsaufbewahrungsdatenbankeintrags, der die Kennung der Sendungshalterung mit der Kennung der Sendungsaufbewahrungsvorrichtung verknüpft) und/oder ob zumindest eine der in dem Aufbewahrungsraum angeordneten Sendungshalterungen frei ist (z.B. in Form eines oder mehrerer Sendungsaufbewahrungsdatenbankeinträge, die die Kennung(en) der freien Sendungshalterung(en) repräsentiert/en und/oder enthält/enthalten).

Eine Zugriffsberechtigungsinformation zur Abholung zumindest einer Sendung und/oder zur Hinterlegung zumindest einer Sendung können beispielsweise durch Empfänger und/oder Absender von Sendungen genutzt werden. Zum Beispiel erhält ein Empfänger einer Sendung eine Benachrichtigung mit einer Zugriffsberechtigungsinformation zur Abholung der Sendung, wenn die Sendung in einer Sendungshalterung der Sendungsaufbewahrungsvorrichtung hinterlegt wurde; und ein Absender einer Sendung kann beispielsweise eine Benachrichtigung mit einer Zugriffsberechtigungsinformation zur Hinterlegung der Sendung in einer Sendungshalterung der Sendungsaufbewahrungsvorrichtung anfordern. Hierdurch wird der Zugriff der Empfänger und/oder Absender von Sendungen auf eine oder mehrere konkrete Abholungen und/oder Hinterlegungen beschränkt. Es versteht sich, dass auch für einen Zusteller entsprechende Zugriffsberechtigungsinformationen zur Abholung zumindest einer Sendung und/oder zur Hinterlegung zumindest einer Sendung genutzt werden können. Allerdings kann auch vorgesehen sein, dass der Zusteller grundsätzlich auf alle Sendungshalterungen der Sendungsaufbewahrungsvorrichtung zugreifen darf, um den Zusteller eine möglichst flexible Hinterlegung und Abholung von Sendungen zu ermöglichen.

In einer beispielhaften Ausführungsform der Erfindung ist die Sendungsaufbewahrungsvorrichtung ein Gebäude und/oder ein Teil eines Gebäudes, und wobei der Aufbewahrungsraum ein Raum des Gebäudes ist. Wie oben offenbart, ist das Gebäude beispielsweise eine Garage oder ein Gartenhaus oder ein Geräteschuppen. Der Aufbewahrungsraum kann dementsprechend ein Teil dieses Gebäudes sein. Zum Beispiel ist der Aufbewahrungsraum ein Raum dieses Gebäudes und/oder ein innerhalb dieses Gebäudes befindlicher Raum (z.B. ein von dem Gebäude umschlossener Raum). Der Raum ist beispielsweise durch eine Tür des Gebäudes zugänglich.

In einer beispielhaften Ausführungsform der Erfindung wird der Zugang für den Benutzer zu dem Aufbewahrungsraum durch das Entriegeln und/oder Öffnen einer Tür der Sendungsaufbewahrungsvorrichtung gewährt wird. Wenn die Sendungsaufbewahrungsvorrichtung, wie oben offenbart ein Gebäude und/oder ein Teil eines Gebäudes ist, dann ist die Tür beispielsweise eine Tür dieses Gebäudes.

Wie oben offenbart, kann die Tür beispielsweise ein ansteuerbares Entriegelungsmittel (z.B. einen ansteuerbaren Entriegelungsmechanismus wie ein elektronisches Schloss) zum Entriegeln Tür und/oder ein ansteuerbares Öffnungsmittel (z.B. einen ansteuerbaren Öffnungsmechanismus wie einen Türöffner und/oder Türsummer) zum Öffnen der Tür aufweisen. Dementsprechend kann das Bewirken des Gewährens des Zugangs zu dem Aufbewahrungsraum durch das entsprechende Ansteuern des Entriegelungsmittels, um ein Entriegeln der Tür zu veranlassen, und/oder des Öffnungsmittels, um ein Öffnen der Tür zu veranlassen, erfolgen.

In einer beispielhaften Ausführungsform der Erfindung basiert das Bestimmen, ob der Benutzer nur auf die eine oder mehreren der Sendungshalterungen zugreift, für die die Zugriffsberechtigungsinformation den Benutzer zum Zugriff berechtigt, zumindest teilweise auf Sensorinformationen.

Eine Sensorinformation repräsentiert beispielsweise einen durch einen Sensor an der Position des Sensors erfassten Parameter (z.B. einen Messwert einer an der Position des Sensors erfassbaren physikalischen oder chemischen Größe). Die Sensorinformationen repräsentieren beispielsweise durch einen oder mehrere verschiedene Sensoren (z.B. durch zumindest zwei verschiedene Sensoren) erfasste Parameter.

Zum Beispiel können die Sensorinformationen zumindest teilweise durch das Erfassen von einem oder mehreren Parametern durch einen oder mehrere Sensoren erhalten werden (z.B. wenn die Sensoren zumindest teilweise ein Teil der Steuervorrichtung sind). Alternativ oder zusätzlich kann das Erhalten der Sensorinformationen zumindest teilweise auch durch das Empfangen der Sensorinformationen (z.B. durch eine Kommunikationsschnittstelle der Steuervorrichtung) erfolgen (z.B. wenn die Sensoren zumindest teilweise extern von der Steuervorrichtung sind).

Zum Beispiel repräsentieren die Sensorinformationen einen oder mehrere Parameter, wobei die Parameter durch einen oder mehrere in dem Aufbewahrungsraum angeordnete Sensoren und/oder durch einen oder mehrere Sensoren der Sendungshalterungen erfasst werden.

Beispielsweise umfasst jede der Sendungshalterungen zumindest einen Sensor, wobei der jeweilige Sensor eingerichtet ist zumindest einen der folgenden Sendungshalterungsparameter zu erfassen:
- ein Gewicht einer durch die jeweilige Sendungshalterung gehaltenen Sendung,
- eine Erschütterung der jeweiligen Sendungshalterung,
- ein Öffnen und/oder Schließen eines Verschlussmittels der jeweiligen Sendungshalterung,
- eine Beschädigung der jeweiligen Sendungshalterung und/oder eines Teils der jeweiligen Sendungshalterung,
- eine Kennzeichnung einer durch die jeweilige Sendungshalterung gehaltenen Sendung.

Beispiele für Sensoren zum Erfassen dieser Sendungshalterungsparameter sind ein Drucksensor zum Erfassen eines Gewichts (z.B. ein piezoresistiver oder kapazitiver Drucksensor), ein Funksensor zum Erfassen einer (z.B. drahtlos erfassbaren) Kennzeichnung (z.B. eine drahtlose Kommunikationsschnittstelle wie ein RFID-, NFC- und/oder Bluetooth-Sensor), ein Bildsensor zum Erfassen einer (z.B. optisch erfassbaren) Kennzeichnung (z.B. eine Bild- und/oder Videokamera, ein CMOS-Sensor und/oder ein CCD-Sensor), ein Öffnungs- und/oder Schließsensor zum Erfassen eines Öffnens und/oder Schließens eines Verschlussmittels, ein Sensor zum Erfassen einer Erschütterung (z.B. ein Beschleunigungssensor), ein Sensor zum Erfassen einer Beschädigung (z.B. ein kapazitiver Sensor und/oder ein Beschleunigungssensor). Es versteht sich, dass diese Aufzählung nur beispielhaft und nicht abschließend ist.

Wenn sich das Gewicht einer durch die jeweilige Sendungshalterung gehaltenen Sendung verändert, so lässt dies darauf zurückschließen, dass die durch die jeweilige Sendungshalterung gehaltene Sendung sich verändert hat, z.B. weil eine Sendung in der jeweiligen Sendungshalterung hinterlegt oder eine Sendung aus der jeweiligen Sendungshalterung entnommen wurde. Ein ähnlicher Rückschluss kann auch gezogen werden, wenn sich Verschlussmittel der jeweiligen Sendungshalterung öffnen und/oder schließen oder sich eine Kennzeichnung einer durch die jeweilige Sendungshalterung gehaltenen Sendung verändert. Eine Beschädigung der jeweiligen Sendungshalterung und/oder eines Teils der jeweiligen Sendungshalterung sowie eine Erschütterung der jeweiligen Sendungshalterung lässt darauf schließen, dass ein Zugriff auf die jeweilige Sendungshalterung stattfindet (z.B. im Falle einer Beschädigung ein unberechtigter Zugriff).

Eine Änderung eines oder mehrerer dieser Sendungshalterungsparameter lässt somit auf einen möglichen Zugriff auf die jeweilige Sendungshalterung schließen. Das Erfassen dieser Sendungshalterungsparameter ist somit vorteilhaft, um bestimmen zu können, ob ein möglicher Zugriff auf eine oder mehrere der Sendungshalterungen stattfindet. Zum Beispiel kann festgelegt sein, dass, wenn eine Änderung eines Sendungshalterungsparameters durch einen Sensor einer jeweiligen Sendungshalterung erfasst wird, bestimmt wird, dass ein Zugriff auf diese jeweilige Sendungshalterung stattfindet. Wenn die Zugriffsberechtigungsinformation den Benutzer nicht zum Zugriff auf diese jeweilige Sendungshalterung berechtigt, wird ferner beispielsweise bestimmt, dass der Benutzer unberechtigt auf diese jeweilige Sendungshalterung zugreift. Ferner kann beispielsweise festgelegt sein, dass wenn eine Beschädigung der jeweiligen Sendungshalterung und/oder eines Teils der jeweiligen Sendungshalterung durch einen Sensor einer jeweiligen Sendungshalterung erfasst wird, bestimmt wird, dass der Benutzer unberechtigt auf diese jeweilige Sendungshalterung zugreift. Es versteht sich, dass, wenn die Sensorinformationen auf einen möglichen Zugriff schließen lassen und dies in der Folge basierend auf den Sensorinformationen entsprechend bestimmt wird, nicht zwangsläufig auch tatsächlich ein Zugriff stattfinden muss (z.B. weil ein Sensor fehlerhaft ist oder ein anderes Ereignis zu den Sensorinformationen geführt hat).

Ferner können in dem Aufbewahrungsraum ein oder mehrere Sensoren angeordnet sein, wobei die Sensoren beispielsweise eingerichtet sind, zumindest einen der folgenden Aufbewahrungsraumparameter zu erfassen:
- ein Ent- und/oder Verriegeln und/oder ein Öffnen und/oder Schließen eines Verschlussmittels (z.B. einer Tür und/oder Klappe) der Sendungsaufbewahrungsvorrichtung,
- eine Präsenz einer oder mehrere Personen (z.B. des Benutzers) in dem Aufbewahrungsraum und/oder einem Teil des Aufbewahrungsraums,
- ein Bild (z.B. ein Standbild) und/oder mehrere Bilder (z.B. eine Bildsequenz und/oder bewegte Bilder in Form eines Videos) des Aufbewahrungsraums und/oder eines Teils des Aufbewahrungsraums,
- einen in dem Aufbewahrungsraum und/oder einem Teil des Aufbewahrungsraums erfassbaren Ton (z.B. ein Schallereignis in Form von Sprache, Musik und/oder sonstigen Geräuschen).

Beispiele für Sensoren zum Erfassen dieser Aufbewahrungsraumparameter sind ein Öffnungssensor zum Erfassen des Öffnens und/oder Schließens eines Verschlussmittels (z.B. ein Türöffnungssensor), ein Bewegungssensor zum Erfassen einer Präsenz einer oder mehrere Personen (z.B. ein Bewegungsmelder), ein Lichtsensor (z.B. ein Helligkeitssensor, eine Photodiode und/oder ein Photowiderstand, z.B. für eine Lichtschranke zum Erfassen eines Betretens und/oder Verlassens des Aufbewahrungsraums durch eine oder mehrere Personen und somit zum Erfassen einer Präsenz einer oder mehrere Personen), ein Funksensor zum Erfassen einer Präsenz einer oder mehrerer Benutzervorrichtungen einer oder mehrerer Personen und somit zum Erfassen einer Präsenz einer oder mehrerer Personen (z.B. eine drahtlose Kommunikationsschnittstelle wie ein WLAN-, RFID-, NFC- und/oder Bluetooth-Sensor), ein Schallsensor zum Erfassen eines Tons (z.B. ein Mikrofon und/oder ein Geräuschsensor), ein Bildsensor zum Erfassen eines oder mehrerer Bilder (z.B. eine Bild- und/oder Videokamera, ein CMOS-Sensor und/oder ein CCD-Sensor). Es versteht sich, dass diese Aufzählung nur beispielhaft und nicht abschließend ist.

Diese Aufbewahrungsraumparameter erlauben eine Überwachung und/oder Protokollierung der Handlungen eines Benutzers solange sich der Benutzer in dem Aufbewahrungsraum aufhält. Dies ist beispielsweise vorteilhaft, um die Handlungen des Benutzers nachvollziehen zu können, falls bestimmt wird, dass der Benutzer unberechtigt auf eine der Sendungshalterungen zugreift.

Es versteht sich, dass das Erfassen eines oder mehrerer Parameter (z.B. eines oder mehrerer Aufbewahrungsraumparameter und/oder eines oder mehrerer Sendungshalterungsparameter) und/oder das Bewirken des Erfassens eines oder mehrerer Parameter (z.B. durch einen oder mehrere Sensoren, z.B. durch einen oder mehrere Sensoren der Sendungshalterungen und/oder in dem Aufbewahrungsraum angeordneten Sensoren) auch Teil des Verfahrens (d.h. von dem Verfahren umfasst) sein kann. Das Bewirken des Erfassens eines oder mehrerer Parameter kann beispielsweise durch das Ansteuern eines oder mehrerer Sensoren erfolgen. Unter einem Ansteuern eines jeweiligen Sensors soll beispielsweise verstanden werden, dass eine Steuerinformation an den jeweiligen Sensoren (z.B. an eine Kommunikationsschnittstelle des jeweiligen Sensors) gesendet wird (z.B. durch eine Kommunikationsschnittstelle der Steuervorrichtung), die eingerichtet sind, den jeweiligen Sensor zu veranlassen, dass er einen oder mehrere der Parameter erfasst.

In einer beispielhaften Ausführungsform der Erfindung erfolgt das Bestimmen, ob der Benutzer nur auf die eine oder mehreren der Sendungshalterungen zugreift, für die die Zugriffsberechtigungsinformation den Benutzer zum Zugriff berechtigt, gemäß einer oder mehreren vorgegebenen Regeln und/oder gemäß einem Algorithmus zur Mustererkennung und/oder gemäß einem Algorithmus zum maschinellen Lernen.

Wie oben offenbart, können die vorgegebenen Regeln beispielsweise für den Fall, dass bestimmte Sensorinformationen erhalten werden, die einen Sendungsparameter enthalten und/oder repräsentieren, der auf einen Zugriff auf eine jeweilige Sendungshalterung schließen lässt, festlegen, dass, wenn die Zugriffsberechtigungsinformation den Benutzer nicht zum Zugriff auf diese jeweilige Sendungshalterung berechtigt, bestimmt wird, dass der Benutzer unberechtigt auf diese jeweilige Sendungshalterung zugreift. Ein Algorithmus zur Mustererkennung kann beispielsweise anhand eines durch die Sensorinformationen repräsentiertes und/oder darin enthaltenes Muster einen Zugriff (z.B. einen möglichen Zugriff) auf eine jeweilige Sendungshalterung erkennen und somit das Bestimmen, ob der Benutzer nur auf die eine oder mehreren der Sendungshalterungen zugreift, für die die Zugriffsberechtigungsinformation den Benutzer zum Zugriff berechtigt, unterstützen. Dies gilt entsprechend auch für einen Algorithmus zum maschinellen Lernen, der beispielsweise mit Sensorinformationen, die während eines oder mehrerer Zugriffe auf Sendungshalterungen erhalten wurde, trainiert wird, um so einen Zugriff (z.B. eine möglichen Zugriff) auf eine jeweilige Sendungshalterung erkennen zu können.

In einer beispielhaften Ausführungsform der Erfindung umfasst das Verfahren ferner:
- wenn bestimmt wird, dass der Benutzer unberechtigt auf zumindest eine Sendungshalterung der Sendungshalterungen zugreift, für die die Zugriffsberechtigungsinformation den Benutzer nicht zum Zugriff berechtigt, Auslösen und/oder Bewirken des Auslösens einer ersten Alarmaktion.

Beispielsweise ist die erste Alarmaktion eine lokale Alarmaktion, die durch einen Benutzer in dem Aufbewahrungsraum und/oder in einer Umgebung der Sendungsaufbewahrungsvorrichtung wahrnehmbar ist (z.B. akustisch und/oder optisch wahrnehmbar ist). Dementsprechend soll unter dem Auslösen der ersten Alarmaktion das Ausgeben eines durch einen Benutzer in dem Aufbewahrungsraum und/oder in einer Umgebung der Sendungsaufbewahrungsvorrichtung wahrnehmbaren Signals (z.B. eines akustischen und/oder optischen Signals) verstanden werden. Dies ist beispielsweise vorteilhaft, um den Benutzer darauf aufmerksam zu machen, dass bestimmt wurde, dass der Benutzer unberechtigt auf zumindest eine Sendungshalterung der Sendungshalterungen zugreift. So erhält der Benutzer beispielsweise die Gelegenheit den unberechtigten Zugriff rückgängig zu machen und/oder zu beenden.

Zum Beispiel wird die erste Alarmaktion durch einen Signalgeber der Sendungsaufbewahrungsvorrichtung, insbesondere einen akustischen und/oder optischen Signalgeber zum Ausgeben eines akustischen und/oder optischen Signals, ausgeführt. Der Signalgeber kann in dem Aufbewahrungsraum angeordnet sein.

Das Bewirken des Auslösens der ersten Alarmaktion kann beispielsweise durch das Ansteuern eines solchen Signalgebers der Sendungsaufbewahrungsvorrichtung erfolgen, um den Signalgeber zu veranlassen, ein entsprechendes Signal auszugeben. Zum Beispiel wird eine entsprechende Steuerinformation die eingerichtet ist, den Signalgeber zu veranlassen, ein solches Signal auszugeben, an den Signalgeber (z.B. an eine Kommunikationsschnittstelle des Signalgebers) gesendet (z.B. durch eine Kommunikationsschnittstelle der Steuervorrichtung).

Ferner kann das Verfahren beispielsweise umfassen:
- wenn bestimmt wird, dass der Benutzer nach Ablauf eines vorgegebenen Zeitraums nach dem Auslösen und/oder Bewirken des Auslösens der ersten Alarmaktion weiterhin unberechtigt auf die zumindest eine Sendungshalterung der Sendungshalterungen zugreift, Auslösen und/oder Bewirken des Auslösens einer zweiten Alarmaktion.

Zum Beispiel umfasst die zweite Alarmaktion das Benachrichtigen und/oder das Bewirken des Benachrichtigens eines oder mehrerer weiterer Benutzer und/oder das Protokollieren und/oder das Bewirken des Protokollierens des unberechtigten Zugriffs.

Das Benachrichtigen eines oder mehrerer weiterer Benutzer (z.B. eines oder mehrerer weiterer Benutzer der Sendungsaufbewahrungsvorrichtung) erfolgt beispielsweise durch das Senden einer Nachricht (z.B. eine Sprachnachricht, eine Textnachricht und/oder eine Emailnachricht) an die weiteren Benutzer und/oder an jeweilige Benutzervorrichtungen (z.B. tragbare Benutzervorrichtungen) der weiteren Benutzer. Dabei soll eine Nachricht als an einen Benutzer und/oder an eine Benutzervorrichtung des Benutzers gesendet verstanden werden, wenn die Nachricht an eine dem Benutzer zugeordnete Nachrichtenadresse (z.B. eine Emailadresse und/oder eine Telefonnummer) und/oder an eine dem Benutzer zugeordnete Benutzervorrichtung (z.B. an eine Netzwerkadresse wie eine IP(Internet Protokoll)-Adresse der dem Benutzer zugeordneten Benutzervorrichtung) gesendet wird. Entsprechende Informationen (z.B. Informationen, die eine Nachrichtenadresse der weiteren Benutzer repräsentieren) können beispielsweise in einer Benutzerdatenbank gespeichert sein. Dies ist beispielsweise vorteilhaft, um die weiteren Benutzer auf einen möglichen unberechtigten Zugriff aufmerksam zu machen.

Das Protokollieren des Zugriffs kann beispielsweise durch das Speichern von Protokollinformationen, die die Zugriffsberechtigungsinformation repräsentieren und/oder enthalten, erfolgen. Ferner können die Protokollinformationen beispielsweise einen Zeitstempel (z.B. eine Angabe des Zeitpunkts des unberechtigten Zugriffs) und/oder Sensorinformationen (z.B. Sensorinformationen, die einen oder mehrere Sendungshalterungsparameter und/oder einen oder mehrere Aufbewahrungsraumparameters enthalten und/oder repräsentieren) enthalten und/oder repräsentieren. Die Protokollinformationen können beispielsweise in einer Protokolldatenbank gespeichert werden (z.B. in einem Speicher der Steuervorrichtung). Dies ist beispielsweise vorteilhaft, um im Nachhinein aufklären zu können, ob tatsächlich ein unberechtigter Zugriff stattgefunden hat.

Das Bewirken des Benachrichtigens und/oder das Bewirken des Protokollierens soll derart verstanden werden, dass eine (oder mehrere) andere Vorrichtung(en) als eine das Verfahren ausführende Vorrichtung (z.B. die Steuervorrichtung) veranlasst werden, das Benachrichtigen und/oder Protokollieren auszuführen. Zum Beispiel kann die eine (oder mehrere) andere Vorrichtung(en) entsprechend angesteuert werden (z.B. indem entsprechende Steuerinformationen an die eine (oder mehrere) andere Vorrichtung(en) gesendet werden, die die eine (oder mehrere) andere Vorrichtung(en) veranlassen, einen oder mehrere weiterer Benutzer zu benachrichtigen und/oder den unberechtigten Zugriff zu protokollieren).

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1: eine schematische Darstellung einer beispielhaften Ausführungsform einer gemäß der Erfindung offenbarten Steuervorrichtung;
- Fig. 2: eine schematische Darstellung einer beispielhaften Ausführungsform eines gemäß der Erfindung offenbarten Systems;
- Fig. 3: ein Flussdiagramm einer beispielhaften Ausführungsform eines gemäß der Erfindung offenbarten Verfahrens; und
- Fig. 4: beispielhafte Ausführungsformen von Speichermedien.

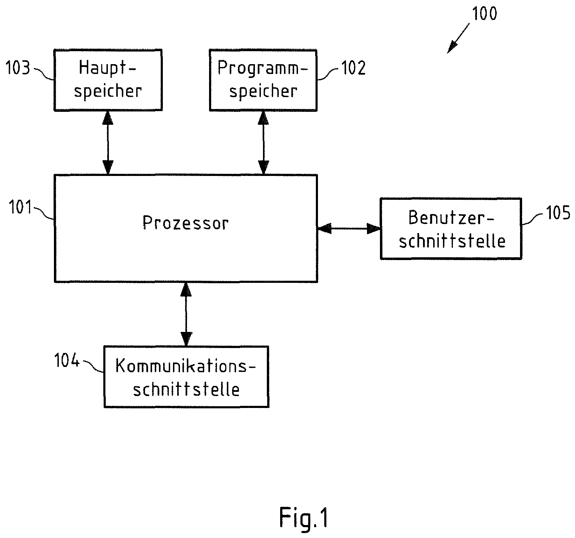

Fig. 1 ist eine schematische Darstellung einer beispielhaften Ausführungsform einer gemäß der Erfindung offenbarten Steuervorrichtung 100.

Die Steuervorrichtung 100 umfasst beispielhaft einen Prozessor 101 und verbunden mit dem Prozessor 101 einen ersten Speicher als Programm- und Datenspeicher 102, einen zweiten Speicher als Hauptspeicher 103, eine Kommunikationsschnittstelle 104 und eine Benutzerschnittstelle 105.

Unter einem Prozessor soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass die Vorrichtung 100 auch mehrere Prozessoren 101 umfassen kann.

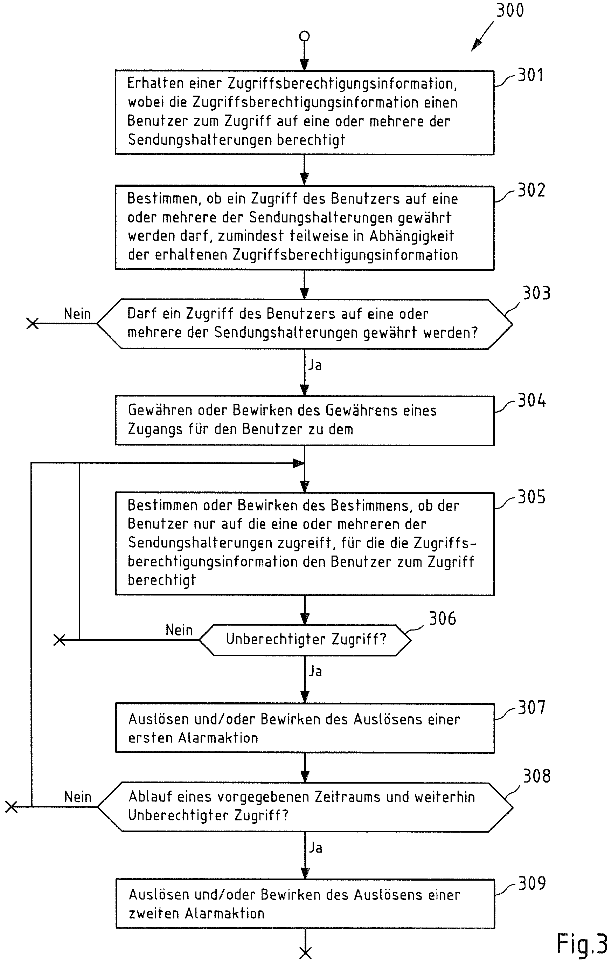

Prozessor 101 führt Programmanweisungen aus, die in Programmspeicher 102 gespeichert sind, und speichert beispielsweise Zwischenergebnisse oder ähnliches in Hauptspeicher 103. Der Programmspeicher 102 enthält beispielsweise Programmanweisungen eines Computerprogramms (z.B. ein gemäß der Erfindung offenbartes Computerprogramm), die den Prozessor 101 veranlassen, ein gemäß der Erfindung offenbartes Verfahren (z.B. das Verfahren gemäß dem in Fig. 3 dargestellten Flussdiagram 300) auszuführen und/oder zu steuern, wenn der Prozessor 101 diese in Programmspeicher 102 gespeicherten Programmanweisungen ausführt. Außerdem können in Programmspeicher 102 beispielsweise eine oder mehrere Datenbanken (z.B. eine Benutzerdatenbank und eine Sendungsaufbewahrungsdatenbank) oder Repräsentationen einer oder mehrerer Datenbanken gespeichert sein.

Programmspeicher 102 enthält ferner beispielsweise das Betriebssystem der Steuervorrichtung 100, das beim Starten der Steuervorrichtung 100 zumindest teilweise in Hauptspeicher 103 geladen und vom Prozessor 101 ausgeführt wird. Insbesondere wird beim Starten der Steuervorrichtung 100 zumindest ein Teil des Kerns des Betriebssystems in den Hauptspeicher 103 geladen und von Prozessor 101 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Steuervorrichtung zur Informations- und/oder Datenverarbeitung. Es verwaltet beispielsweise Betriebsmittel wie einen Hauptspeicher und einen Programmspeicher, stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-Lese-Speicher) und/oder ein optischer Speicher. Ein Hauptspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Hauptspeicher 103 und Programmspeicher 102 können auch als ein Speicher ausgebildet sein. Alternativ können Hauptspeicher 103 und/oder Programmspeicher 102 jeweils durch mehrere Speicher gebildet werden. Ferner können Hauptspeicher 103 und/oder Programmspeicher 102 auch Teil des Prozessors 101 sein.

Prozessor 101 steuert die Kommunikationsschnittstelle 104, welche beispielsweise als drahtlose und/oder drahtgebundene Kommunikationsschnittstelle ausgebildet ist. Eine drahtlose und/oder drahtgebundene Kommunikationsschnittstelle kann beispielsweise Informationen (über einen drahtlosen und/oder drahtgebundenen Kommunikationspfad) empfangen und an den Prozessor 101 weiterleiten und/oder Informationen von dem Prozessor 101 empfangen und (über einen drahtlosen und/oder drahtgebundenen Kommunikationspfad) senden.

Ein Beispiel für eine drahtlose Kommunikationsschnittstelle ist ein drahtloser Netzwerkadapter. Zum Beispiel umfasst eine drahtlose Kommunikationsschnittstelle nebst einer Antenne zumindest eine Senderschaltung und eine Empfängerschaltung oder eine Sendeempfängerschaltung. Beispiele für eine drahtlose Kommunikationsschnittstelle sind eine GSM-, UMTS- und/oder LTE-Schnittstelle und/oder eine WLAN- und/oder Bluetooth-Schnittstelle. Wie oben offenbart, werden die GSM-, UMTS- und LTE-Spezifikationen von dem 3rd Generation Partnership Project (3GPP) gepflegt und entwickelt und sind derzeit im Internet unter www.3gpp.com erhältlich. WLAN ist zum Beispiel in den Standards der IEEE-802.11-Familie spezifiziert. Die Bluetooth-Spezifikationen sind derzeit im Internet unter www.bluetooth.org erhältlich.

Ein Beispiel für eine drahtgebundene Kommunikationsschnittstelle ist ein drahtgebundener Netzwerkadapter. Zum Beispiel umfasst eine drahtgebundene Kommunikationsschnittstelle zumindest eine Senderschaltung und eine Empfängerschaltung oder eine Sendeempfängerschaltung. Ein Beispiel für eine drahtgebundene Kommunikationsschnittstelle ist eine Ethernet-Schnittstelle. Ethernet ist unter anderem in den Standards der IEEE-802.3-Familie spezifiziert.

Die Kommunikationsschnittstelle 104 ist beispielsweise eingerichtet zum Empfangen von Informationen (z.B. von einer Zugriffsberechtigungsinformation und/oder Sensorinformationen) und/oder zum Senden von Informationen (z.B. von Steuerinformationen).

Ferner steuert Prozessor 101 die Benutzerschnittstelle 105, die zum Erfassen von Informationen (z.B. einer Zugriffsberechtigungsinformation) in Form einer Benutzereingabe (z.B. als Tastatur- oder Mauseingabe und/oder als Spracheingabe und/oder als Geste) und/oder zum Ausgeben von Informationen in Form einer beispielsweise akustischen und/oder optischen Benutzerausgabe (z.B. als Sprachausgabe und/oder als Textausgabe) eingerichtet ist. Eine Benutzerschnittstelle ist beispielsweise eine Tastatur, eine Maus, eine Kamera, ein Bildschirm, ein berührungsempfindlicher Bildschirm, ein Lautsprecher und/oder ein Mikrofon.

Die Komponenten 101 bis 105 der Steuervorrichtung 100 sind beispielsweise über einen oder mehrere Bussysteme (z.B. ein oder mehrere serielle und/oder parallele Busverbindungen) kommunikativ und/oder operativ miteinander verbunden.

Es versteht sich, dass die Steuervorrichtung 100 neben den Komponenten 101 bis 105 weitere Komponenten umfassen kann.

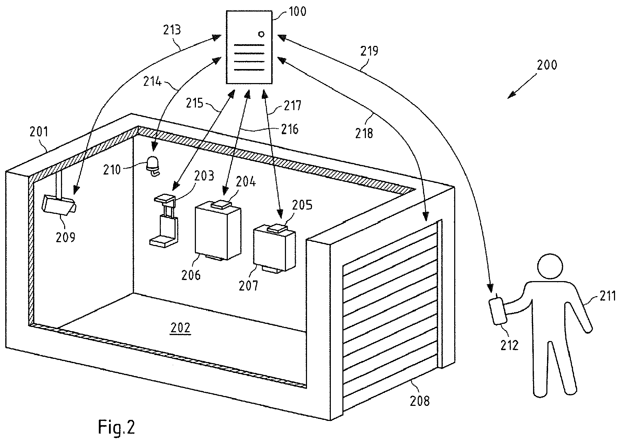

Fig. 2 zeigt eine schematische Darstellung einer beispielhaften Ausführungsform eines gemäß der Erfindung offenbarten Systems 200.

System 200 umfasst unter anderem eine als Garage dargestellte Sendungsaufbewahrungsvorrichtung 201 mit einen Aufbewahrungsraum 202 in dem mehrere Sendungshalterungen 203, 204 und 205 angeordnet sind. Zum Beispiel sind die Sendungshalterungen 203, 204 und 205 an einer den Aufbewahrungsraum 202 umschließenden Wand der Garage 201 befestigt (z.B. durch eine Schraubdübelverbindung und/oder eine Klebeverbindung).

Wie oben offenbart, ist eine Sendungshalterung beispielsweise eine Vorrichtung zum Halten einer Sendung. Die Sendungshalterungen 203, 204 und 205 sind beispielhaft eingerichtet, jeweils eine Sendung durch eine kraftschlüssige Klemmverbindung zu halten. Zum Beispiel halten die Sendungshalterungen 204 und 205 jeweils eine der Sendungen 206 und 207.

Jede der Sendungshalterungen kann einen oder mehrere optionale Sensoren (nicht dargestellt) zum Erfassen eines oder mehrerer Sendungshalterungsparameter umfassen. Wie oben offenbart, kann ein Sendungshalterungsparameter einer der Sendungshalterungen 203, 204 und 205 einer der folgenden Sendungshalterungsparameter sein:
- ein Gewicht einer durch die jeweilige Sendungshalterung gehaltenen Sendung,
- eine Erschütterung der jeweiligen Sendungshalterung,
- ein Öffnen und/oder Schließen eines Verschlussmittels der jeweiligen Sendungshalterung,
- eine Beschädigung der jeweiligen Sendungshalterung und/oder eines Teils der jeweiligen Sendungshalterung,
- eine Kennzeichnung einer durch die jeweilige Sendungshalterung gehaltenen Sendung.

Im Folgenden wird beispielhaft davon ausgegangen, dass jede der Sendungshalterungen 203, 204 und 205 zumindest einen jeweiligen Drucksensor zum Erfassen eines Gewichtes einer durch die jeweilige Sendungshalterung gehaltenen Sendung umfasst.

Wie in Fig. 2 dargestellt, weist die Garage 201 eine Tür 208 auf, durch die der Aufbewahrungsraum 202 zugänglich ist. Im Folgenden wird beispielhaft davon ausgegangen, dass die Tür 208 ein Garagentor mit einem elektrisch ansteuerbaren Garagentorantrieb zum Öffnen und Schließen des Garagentors ist.

Ferner sind in Aufbewahrungsraum 202 ein optionaler Sensor in Form einer Überwachungskamera 209 zum Erfassen eines oder mehrerer Bilder eines Teils des Aufbewahrungsraums und ein optionaler Signalgeber in Form eines Signallichts 210 angeordnet.

Darüber hinaus ist in Fig. 2 ein Benutzer 211 mit einer tragbaren Benutzervorrichtung 212 dargestellt. Die tragbare Benutzervorrichtung 212 ist beispielsweise ein Smartphone des Benutzers 211.

In Fig. 2 ist die im Zusammenhang mit Fig. 1 offenbarte Steuervorrichtung 100 beispielhaft als ein von der Garage 201 (d.h. der Sendungsaufbewahrungsvorrichtung) entfernter Server eines Zustelldienstes (z.B. ein Backendserver des Zustelldienstes) dargestellt. In einer solchen Ausführungsform ist die Steuervorrichtung 100 beispielsweise eine Steuervorrichtung für mehrere Sendungsaufbewahrungsvorrichtungen (also neben Garage 201 noch eine oder mehrere weitere Sendungsaufbewahrungsvorrichtungen). Alternativ könnte die Steuervorrichtung 100 jedoch auch eine Steuervorrichtung nur für die Garage 201 sein und beispielsweise in dem Aufbewahrungsraum 202 angeordnet sein. Im Folgenden wird jedoch beispielhaft davon ausgegangen, dass die Steuervorrichtung 100 eine Steuervorrichtung für mehrere Sendungsaufbewahrungsvorrichtungen in Form eines von der Garage 201 (d.h. der Sendungsaufbewahrungsvorrichtung) entfernten Servers des Zustelldienstes ist.

Zum Beispiel hat der Eigentümer die Garage 201 dem Zustelldienst für die Aufbewahrung von Sendungen im Rahmen der Beförderung und Zustellungen von Sendungen durch den Zustelldienst zur Verfügung gestellt.

Zum Beispiel können sich Benutzer (z.B. Absender und Empfänger von Sendungen) zur Abholung und Hinterlegung von Sendungen in der Garage 201 bei dem Zustelldienst registrieren. Zum Beispiel kann vorgesehen sein, dass jeder der registrierten Benutzer für die Abholung und/oder Hinterlegung von Sendungen eine oder mehrere Sendungsaufbewahrungsvorrichtungen wie die Garage 201 nutzen darf. Hierzu kann eine Benutzerdatenbank vorgesehen sein, die Benutzerinformationen zu den bei dem Zustelldienst registrierten Benutzem enthält und/oder repräsentiert. Zum Beispiel enthält die Benutzerdatenbank für jeden der registrierten Benutzer einen Benutzerdatenbankeintrag, der die eindeutige Kennung des jeweiligen Benutzers und die eindeutige(n)n Kennung(en) der Sendungsaufbewahrungsvorrichtung(en), die der jeweilige Benutzer für die Abholung und/oder Hinterlegung von Sendungen nutzen darf, enthält und/oder repräsentiert.

Ferner kann eine Sendungsaufbewahrungsdatenbank vorgesehen sein, die Sendungsaufbewahrungsinfonnationen enthält und/oder repräsentiert. Dabei sollen unter einer Sendungsaufbewahrungsinformation beispielsweise eine Angabe, ob eine Sendungshalterung frei oder belegt ist verstanden werden, beispielsweise in Form eines Sendungsaufbewahrungsdatenbankeintrags, der, wenn die Sendungshalterung belegt ist, die Kennung der Sendungshalterung und die Kennung der von der Sendungshalterung gehaltenen Sendung repräsentiert und/oder enthält und, wenn die Sendungshalterung frei ist, die Kennung der Sendungshalterung und eine Information, dass die Sendungshalterung frei ist, enthält und/oder repräsentiert. Eine Sendungsaufbewahrungsinformation kann außerdem eine Angabe dazu sein, von welcher Sendungshalterung eine Sendung gehalten wird, zum Beispiel in Form eines Sendungsaufbewahrungsdatenbankeintrags, der die Kennung der Sendung und die Kennung der Sendungshalterung, die die Sendung hält, enthält und/oder repräsentiert.

Die Benutzerdatenbank und/oder die Sendungsaufbewahrungsdatenbank können in Programmspeicher 102 der Steuervorrichtung 100 oder separat von der Steuervorrichtung 100, zum Beispiel in einem Speicher einer Datenbankvorrichtung gespeichert sein. Wenn die Benutzerdatenbank und/oder die Sendungsaufbewahrungsdatenbank separat von der Steuervorrichtung 100 gespeichert sind, ist beispielsweise vorgesehen, dass die Steuervorrichtung 100 (z.B. über die Kommunikationsschnittstelle 104) auf die Benutzerdatenbank und/oder die Sendungsaufbewahrungsdatenbank zugreifen und und/oder Benutzerinformationen aus der Benutzerdatenbank und/oder Sendungsaufbewahrungsinformationen aus der Sendungsaufbewahrungsdatenbank abfragen kann. Im Folgenden wird davon ausgegangen, dass die Benutzerdatenbank und die Sendungsaufbewahrungsinformationen in Programmspeicher 102 der Steuervorrichtung 100 gespeichert sind und durch die Steuervorrichtung 100 gepflegt werden.

Die Steuervorrichtung 100 kann über die Kommunikationspfade 213 bis 219 (z.B. durch Kommunikationsschnittstelle 104) mit den Komponenten 203, 204, 205, 208, 209, 210 und 212 des Systems 200 kommunizieren (d.h. Informationen senden und empfangen). Jede der Komponenten 203, 204, 205, 208, 209, 210 und 212 des Systems 200 weist beispielsweise eine entsprechende Kommunikationsschnittstelle auf. Es versteht sich, dass die Kommunikation entlang der Kommunikationspfade 213 bis 219 unmittelbar zwischen der jeweiligen Komponente und der Steuervorrichtung 100 erfolgen kann oder das die Kommunikation entlang der Kommunikationspfade 213 bis 219 eine oder mehrere weitere Komponenten einschließt, zum Beispiel könnte in dem Aufbewahrungsraum 202 als eine solche weitere Komponente ein Hub angeordnet sein, das Informationen (z.B. eine Zugriffsberechtigungsinformation und/oder Sensorinformationen) von den Komponenten 203, 204, 205, 208, 209, 210 und 212 empfängt und an die Steuervorrichtung weiterleitet und Informationen (z.B. Steuerinformationen) von der Steuervorrichtung 100 empfängt und an eine oder mehrere der Komponenten 203, 204, 205, 208, 209, 210 und 212 weiterleitet. Die Kommunikationspfade 213 bis 219 können über ein oder mehrere Netzwerke (z.B. ein drahtloses Kommunikationsnetzwerk wie ein WLAN-Netzwerk und/oder ein Mobilfunknetzwerk und/oder das Internet) verlaufen.

Zum Beispiel kann vorgesehen sein, dass, wenn ein Absender einer Sendung oder ein Zusteller eine Sendung in einer der Sendungshalterungen 203, 204 und 205 hinterlegt, eine Benutzervorrichtung des Absenders oder Zustellers eine entsprechende Hinterlegungsinformation, die beispielsweise die Kennung der Sendung und die Kennung der Sendungshalterung, in der die Sendung hinterlegt wurde, enthält und/oder repräsentiert, an die Steuervorrichtung 100 sendet. Hierzu kann der Absender oder Zusteller beispielsweise die Kennung der Sendung (z.B. ein auf der Sendung aufgedruckter Barcode) und die Kennung der Sendungshalterung (z.B. ein auf der Sendungshalterung aufgedruckter Barcode) mit seiner Benutzervorrichtung einscannen und anschließend das Versenden der Hinterlegungsinformationen veranlassen. Wenn die Steuervorrichtung 100 die Hinterlegungsinformation empfängt, pflegt sie die Sendungsaufbewahrungsdatenbank entsprechend, zum Beispiel indem sie einen Sendungsaufbewahrungsdatenbankeintrag derart erzeugt und/oder aktualisiert, dass er die Kennung der Sendungshalterung und die Kennung der in der Sendungshalterung hinterlegten Sendung repräsentiert und/oder enthält. Ferner kann beispielsweise vorgesehen sein, dass, wenn die Sendung durch einen Zusteller hinterlegt wurde, dem Empfänger der hinterlegten Sendung eine Benachrichtigung zugesendet wird (z.B. durch die Steuervorrichtung 100), dass die Sendung in der Garage 201 hinterlegt wurde.

Ferner kann vorgesehen sein, dass, wenn ein Empfänger einer Sendung oder ein Zusteller eine der von den Sendungshalterungen 203, 204 und 205 gehaltenen Sendungen (z.B. Sendung 206 oder 207) abholt, dass die Benutzervorrichtung des Empfängers oder Zustellers eine entsprechende Abholinformation, die beispielsweise die Kennung der Sendung und die Kennung der Sendungshalterung, die die Sendung gehalten hat, enthält und/oder repräsentiert, an die Steuervorrichtung 100 sendet. Hierzu kann der Empfänger oder Zusteller beispielsweise die Kennung der Sendung (z.B. ein auf der Sendung aufgedruckter Barcode) und die Kennung der Sendungshalterung (z.B. ein auf der Sendungshalterung aufgedruckter Barcode) mit seiner Benutzervorrichtung einscannen und anschließend, das Versenden der Hinterlegungsinformationen veranlassen. Alternativ oder zusätzlich kann vorgesehen sein, dass die Sendungshalterung, die die Sendung gehalten hat, eine entsprechende Abholinformationen mit der Kennung der Sendungshalterung und einer Information, dass die Sendungshalterung frei ist, an die Steuervorrichtung 100 sendet, wenn der Drucksensor der Sendungshalterung eine Änderung des Gewichts der durch die Sendungshalterung gehaltenen Sendung erfasst (z.B. wenn das erfasste Gewicht kleiner als ein vorgegebener Gewichtsschwellwert ist). Wenn die Steuervorrichtung 100 die Abholinformation empfängt, pflegt sie die Sendungsaufbewahrungsdatenbank entsprechend, zum Beispiel indem sie einen Sendungsaufbewahrungsdatenbankeintrag derart erzeugt und/oder aktualisiert, dass er die Kennung der Sendungshalterung und eine Information, dass die Sendungshalterung frei ist, repräsentiert und/oder enthält.

Fig. 3 zeigt ein Flussdiagramm 300 mit Schritten einer beispielhaften Ausführungsform eines gemäß der Erfindung offenbarten Verfahrens. Die Schritte 301 bis 309 des Flussdiagramms 300 können beispielsweise von einer Steuervorrichtung wie der oben im Zusammenhang mit Fig. 1 und Fig. 2 offenbarten Steuervorrichtung 100 ausgeführt werden. Im Folgenden wird beispielhaft davon ausgegangen, dass die Schritte 301 bis 309 des Flussdiagramms 300 durch die Steuervorrichtung 100 in dem in Fig. 2 dargestellten System 200 ausgeführt werden.

In einem Schritt 301 wird eine Zugriffsberechtigungsinformation erhalten. Zum Beispiel wird die Zugriffsberechtigungsinformation in Schritt 302 von der tragbaren Benutzervorrichtung 212 empfangen (z.B. über Kommunikationspfad 219 durch die Kommunikationsschnittstelle 104 der Steuervorrichtung 100 empfangen). Die Zugriffsberechtigungsinformation berechtigt den Benutzer 211 beispielsweise zum Zugriff auf eine oder mehrere der Sendungshalterungen 203, 204 und 205.

Wie oben im Detail offenbart, kann die Zugriffsberechtigungsinformation einen oder mehrere Zugriffsberechtigungsparameter enthalten und/oder repräsentieren. Die Zugangsberechtigungsparameter dienen beispielsweise zum Überprüfen und/oder zum Definieren der Berechtigung des Benutzers 211 zum Zugriff auf eine oder mehrere der Sendungshalterungen 203, 204 und 205.

Die Zugriffsberechtigungsinformation kann beispielsweise eine Zugriffsberechtigungsinformation zur Abholung zumindest einer Sendung sein. Wenn der Benutzer 211 ein Empfänger der Sendungen 206 ist, hat er beispielsweise über seine Benutzervorrichtung 212 eine Benachrichtigung von der Steuervorrichtung 100 empfangen, dass die Sendung 206 in der Garage 201 hinterlegt wurde. Femer enthält die Benachrichtigung beispielsweise eine Zugriffsberechtigungsinformation, die den Benutzer 211 zum Zugriff auf die Sendungshalterung 204, die die Sendung 206 hält, berechtigt. Hierzu enthält und/oder repräsentiert diese Zugriffsberechtigungsinformation zur Abholung der Sendung 206 zumindest eine eindeutige Kennung der Sendung 206 oder der Sendungshalterung 204, die die Sendung 206 hält.

Alternativ oder zusätzlich kann die Zugriffsberechtigungsinformation beispielsweise eine Zugriffsberechtigungsinformation zur Hinterlegung zumindest einer Sendung sein. Wenn der Benutzer 21 1 beispielsweise beabsichtigt eine Sendung zu versenden (d.h. er ist ein Absender dieser Sendung), kann er beispielsweise über seine Benutzervorrichtung 212 eine Benachrichtigung mit einer Zugriffsberechtigungsinformation zur Hinterlegung zumindest einer Sendung in der Garage 201 anfordern (z.B. durch das Senden einer entsprechenden Anforderung an die Steuervorrichtung 100) und durch seine Benutzervorrichtung 212 erhalten (z.B. von der Steuervorrichtung 101 empfangen). Eine solche Zugriffsberechtigungsinformation berechtigt den Benutzer 211 beispielsweise, auf eine freie Sendungshalterung der Sendungshalterungen 203, 204 und 205 zuzugreifen. Hierzu enthält und/oder repräsentiert die Zugriffsberechtigungsinformation zur Hinterlegung einer Sendung zumindest eine eindeutige Kennung einer freien Sendungshalterung (z.B. der Sendungshalterung 203) oder eine Information, dass der Benutzer 211 zum Zugriff auf zumindest eine freie Sendungshalterung der Sendungshalterungen 203, 204 und 205 der Garage 201 berechtigt ist. Ferner kann die Zugriffsberechtigungsinformation eine eindeutige Kennung des Benutzers 211 enthalten und/oder repräsentieren.

Falls der Benutzer 211 dagegen ein Zusteller ist, der beispielsweise eine Sendung in der Garage 201 hinterlegen und die Sendung 207 abholen soll, kann die Zugriffsberechtigungsinformation den Benutzer 211 zum Zugriff auf alle Sendungshalterungen 203, 204 und 205 berechtigen. Hierzu enthält und/oder repräsentiert die Zugriffsberechtigungsinformation eine Information, dass der Benutzer 211 zum Zugriff auf alle Sendungshalterungen 203, 204 und 205 der Garage 201 berechtigt ist.

Ferner kann die Zugriffsberechtigungsinformation in jedem der oben genannten Beispiele eine eindeutige Kennung des Benutzers 211 enthalten und/oder repräsentieren.

In einem Schritt 302 wird zumindest teilweise in Abhängigkeit der in Schritt 301 erhaltenen Zugriffsberechtigungsinformation bestimmt, ob ein Zugriff des Benutzers 211 auf eine oder mehrere der Sendungshalterungen 203, 204 und 205 gewährt werden darf.

Unter Bestimmen, ob ein Zugriff des Benutzers auf eine oder mehrere der Sendungshalterungen gewährt werden darf, zumindest teilweise in Abhängigkeit der erhaltenen Zugriffsberechtigungsinformation, soll beispielsweise verstanden werden, dass geprüft wird, ob die in Schritt 301 erhaltene Zugriffsberechtigungsinformation den Benutzer 211 zum Zugriff auf eine oder mehrere der Sendungshalterungen berechtigt. Das Prüfen kann beispielsweise zumindest teilweise abhängig von der oben offenbarten Benutzerdatenbank erfolgen. Zum Beispiel kann in Schritt 302 beispielsweise zunächst anhand einer durch die in Schritt 301 erhaltene Zugriffsberechtigungsinformation repräsentierten und/oder darin enthaltene Kennung des Benutzer 211 geprüft werden, ob der Benutzer 211 bei dem Zustelldienst registriert ist und die Garage 201 für die Abholung und/oder Hinterlegung von Sendungen nutzen darf.

Wenn der Benutzer 211 die Garage 201 nicht für die Abholung und/oder Hinterlegung von Sendungen nutzen darf, wird in Schritt 302 beispielsweise bestimmt, dass ein Zugriff des Benutzers 211 auf eine oder mehrere der Sendungshalterungen 203, 204 und 205 nicht gewährt werden darf. Andernfalls wird in Schritt 302 beispielsweise zusätzlich geprüft, ob die in Schritt 301 erhaltene Zugriffsberechtigungsinformation den Benutzer zum Zugriff auf eine der Sendungshalterungen 203, 204 und 205 berechtigt, beispielsweise zur Abholung zumindest einer in einer der Sendungshalterungen 203, 204 und 205 gehaltenen Sendungen und/oder zur Hinterlegung zumindest einer Sendung in einer der Sendungshalterungen 203, 204 und 205 berechtigt. Diese zusätzliche Prüfung kann zumindest teilweise abhängig von der oben offenbarten Sendungsaufbewahrungsdatenbank erfolgen. Hinsichtlich dieser zusätzlichen Prüfung sind unter anderem die folgenden Fälle denkbar:
(i) Wenn die Zugriffsberechtigungsinformation eine eindeutige Kennung der Sendungshalterungen 203 (z.B. zur Hinterlegung einer Sendung) oder 204 (z.B. zur Abholung der Sendung 206) enthält und/oder repräsentiert, wird in Schritt 301 beispielsweise bestimmt, dass ein Zugriff des Benutzers 211 nur auf die Sendungshalterung 203 oder 204 gewährt werden darf.
(ii) Wenn die Zugriffsberechtigungsinformation eine eindeutige Kennung der Sendung 206 (z.B. zur Abholung der Sendung 206) enthält und/oder repräsentiert, wird in Schritt 301 beispielsweise zumindest teilweise abhängig von der Sendungsaufbewahrungsdatenbank geprüft, ob die Sendung 206 durch eine der Sendungshalterungen 203, 204 und 205 gehalten wird (z.B. ob ein Sendungsaufbewahrungsdatenbankeintrag, der die Kennung der Sendung 206 und die Kennung einer der Sendungshalterungen 203, 204 und 205 repräsentiert und/oder enthält). Nur dann wenn die Sendung 206 durch eine der Sendungshalterungen 203, 204 und 205 gehalten wird (z.B. wenn ein solcher Sendungsaufbewahrungsdatenbankeintrag existiert), wird in Schritt 301 beispielsweise bestimmt, dass ein Zugriff des Benutzers 211 nur auf diese Sendungshalterung (d.h. Sendungshalterung 204) gewährt werden darf.
(iii) Wenn die Zugriffsberechtigungsinformation eine Information, dass der Benutzer 211 zum Zugriff auf zumindest eine freie Sendungshalterung der Sendungshalterungen 203, 204 und 205 der Garage 201 berechtigt ist enthält und/oder repräsentiert, wird in Schritt 301 beispielsweise zumindest teilweise abhängig von der Sendungsaufbewahrungsdatenbank geprüft, ob eine der Sendungshalterungen 203, 204 und 205 frei ist (z.B. ob ein Sendungsaufbewahrungsdatenbankeintrag, der die Kennung einer der Sendungshalterungen 203, 204 und 205 und eine Information, dass eine der Sendungshalterungen 203, 204 und 205 frei ist, repräsentiert und/oder enthält). Nur dann wenn eine der Sendungshalterungen 203, 204 und 205 frei ist (z.B. wenn ein solcher Sendungsaufbewahrungsdatenbankeintrag existiert), wird in Schritt 301 beispielsweise bestimmt, dass ein Zugriff des Benutzers 211 nur auf die freie Sendungshalterung (d.h. Sendungshalterung 203) gewährt werden darf.
(iv) Wenn die Zugriffsberechtigungsinformation eine Information enthält und/oder repräsentiert, dass der Benutzer 211 zum Zugriff auf alle Sendungshalterungen 203, 204 und 205 der Garage 201 berechtigt ist, wird in Schritt 301 beispielsweise bestimmt, dass ein Zugriff des Benutzers 211 auf alle Sendungshalterungen 203, 204 und 205 gewährt werden darf.

Wenn das Bestimmen in Schritt 302 ergibt, dass kein Zugriff des Benutzers 211 auf eine oder mehrere der Sendungshalterungen 203, 204 und 205 gewährt werden, wird das Flussdiagramm 300 in einem Schritt 303 beendet. Andernfalls wird das Flussdiagramm mit einem Schritt 304 fortgesetzt.

In einem Schritt 304 wird ein Zugang für den Benutzer 211 zu dem Aufbewahrungsraum 202 gewährt und/oder ein Gewähren des Zugangs wird bewirkt.

Das Gewähren eines Zugangs für den Benutzer 211 zu dem Aufbewahrungsraum 202 kann beispielsweise durch das Entriegeln und/oder Öffnen der Tür 208 gewährt werden. Unter dem Bewirken des Gewährens des Zugangs für den Benutzer 211 zu dem Aufbewahrungsraum 202 soll beispielsweise verstanden werden, dass das Gewähren des Zugangs gesteuert wird, beispielsweise indem die Tür 208 derart angesteuert wird, dass sie sich entriegelt und/oder öffnet. Wie oben offenbart ist die Tür 208 ein Garagentor mit einem elektrisch ansteuerbaren Garagentorantrieb zum Öffnen und Schließen des Garagentors. Dementsprechend kann die Steuervorrichtung in Schritt 302 beispielsweise eine Steuerinformation (z.B. durch Kommunikationsschnittstelle 104 der Steuervorrichtung 100 über Kommunikationspfad 218) an die Tür 208 senden, die eingerichtet ist, den Garagentorantrieb zu veranlassen, das Garagentor zu öffnen.

In einem Schritt 305 wird bestimmt, ob der Benutzer 211 nur auf die eine oder mehreren der Sendungshalterungen 203, 204 und 205 zugreift, für die die Zugriffsberechtigungsinformation den Benutzer 211 zum Zugriff berechtigt.

Das Bestimmen in Schritt 305, ob der Benutzer 211 nur auf die eine oder mehreren der Sendungshalterungen zugreift, für die die Zugriffsberechtigungsinformation den Benutzer 211 zum Zugriff berechtigt, umfasst beispielsweise das Überwachen durch die Steuervorrichtung 100, ob der Benutzer auf eine oder mehrere der Sendungshalterungen zugreift, für die die Zugriffsberechtigungsinformation den Benutzer nicht zum Zugriff berechtigt. Dies kann beispielsweise zumindest teilweise abhängig von Sensorinformationen erfolgen, wie unten im Detail offenbart.

Zum Beispiel basiert das Bestimmen in Schritt 305 zumindest teilweise auf Sensorinformationen. Eine Sensorinformation repräsentiert beispielsweise einen durch einen Sensor an der Position des Sensors erfassten Parameter (z.B. einen Messwert einer an der Position des Sensors erfassbaren physikalischen oder chemischen Größe). Die Sensorinformationen repräsentieren beispielsweise durch einen oder mehrere verschiedene Sensoren (z.B. durch zumindest zwei verschiedene Sensoren) erfasste Parameter.

Zum Beispiel können die Sensorinformationen zumindest teilweise durch das Erfassen von einem oder mehreren Parametern durch einen oder mehrere Sensoren erhalten werden (z.B. wenn die Sensoren zumindest teilweise ein Teil der Steuervorrichtung 100 sind). Alternativ oder zusätzlich kann das Erhalten der Sensorinformationen zumindest teilweise auch durch das Empfangen der Sensorinformationen (z.B. durch die Kommunikationsschnittstelle 104 der Steuervorrichtung 100) erfolgen (z.B. wenn die Sensoren zumindest teilweise extern von der Steuervorrichtung 100 sind wie die Videokamera 209 und/oder die Drucksensoren der Sendungshalterungen 203, 204 und 205).

Zum Beispiel repräsentieren die Sensorinformationen einen oder mehrere Parameter, wobei die Parameter durch einen oder mehrere in dem Aufbewahrungsraum angeordnete Sensoren und/oder durch einen oder mehrere Sensoren der Sendungshalterungen erfasst werden.

Wie oben offenbart, umfasst jede der Sendungshalterungen 203, 204 und 205 zumindest einen jeweiligen Drucksensor zum Erfassen eines Gewichtes einer durch die jeweilige Sendungshalterung gehaltenen Sendung.

Wenn sich das Gewicht einer durch die jeweilige Sendungshalterung gehaltenen Sendung verändert, so lässt dies darauf zurückschließen, dass sich die durch die jeweilige Sendungshalterung gehaltene Sendung verändert hat, z.B. weil eine Sendung in der jeweiligen Sendungshalterung hinterlegt oder eine Sendung oder Teile einer Sendung aus der jeweiligen Sendungshalterung entnommen wurde. Eine Änderung dieses Sendungshalterungsparameters (d.h. eines Gewichts einer durch die die jeweilige Sendungshalterung gehaltenen Sendung) lässt somit auf einen möglichen Zugriff auf die jeweilige Sendungshalterung schließen. Das Erfassen dieser Sendungshalterungsparameter ist somit vorteilhaft, um bestimmen zu können, ob ein möglicher Zugriff auf eine oder mehrere der Sendungshalterungen stattfindet.

Zum Beispiel kann festgelegt sein, dass, wenn eine Änderung eines Gewichts einer gehaltenen Sendung durch einen Sensor einer jeweiligen Sendungshalterung erfasst wird, in Schritt 305 bestimmt wird, dass ein Zugriff auf diese jeweilige Sendungshalterung stattfindet. Wenn die in Schritt 301 erhaltene Zugriffsberechtigungsinformation den Benutzer nicht zum Zugriff auf diese jeweilige Sendungshalterung berechtigt, wird in Schritt 305 ferner beispielsweise bestimmt, dass der Benutzer 211 unberechtigt auf diese jeweilige Sendungshalterung zugreift. Es versteht sich, dass, wenn die Sensorinformationen auf einen möglichen Zugriff schließen lassen und dies in der Folge basierend auf den Sensorinformationen entsprechend in Schritt 305 bestimmt wird, nicht zwangsläufig auch tatsächlich ein Zugriff stattfinden muss (z.B. weil ein Sensor fehlerhaft ist oder ein anderes Ereignis zu den Sensorinformationen geführt hat).

Alternativ kann das Bestimmen in Schritt 305 durch die Steuervorrichtung 100 auch nur bewirkt werden. Dabei soll unter dem Bewirken des Bestimmens in Schritt 305 beispielsweise verstanden werden, dass die Steuervorrichtung 100 die Sendungshalterungen 203, 204 und 205 veranlasst, zu überwachen, ob der Benutzer 211 auf eine oder mehrere der Sendungshalterungen 203, 204 und 205 zugreift, für die die Zugriffsberechtigungsinformation den Benutzer 211 nicht zum Zugriff berechtigen. Zum Beispiel sendet die Steuervorrichtung in Schritt 305 an jede der Sendungshalterungen 203, 204 und 205, für die die Zugriffsberechtigungsinformation den Benutzer nicht zum Zugriff berechtigt, eine Steuerinformation (z.B. über einen oder mehrere der Kommunikationspfade 215, 216 und 217 durch die Kommunikationsschnittstelle 104 der Steuervorrichtung 100), die eingerichtet ist, die jeweilige Sendungshalterung zu veranlassen, zu überwachen, ob der Benutzer 211 (unberechtigt) auf sie zugreift. Alternativ kann auch vorgesehen sein, dass jede der Sendungshalterungen 203, 204 und 205 kontinuierlich überwacht, ob ein Benutzer (unberechtigt) auf sie zugreift. In diesem Fall kann in Schritt 305 beispielweise an jeder der Sendungshalterungen 203, 204 und 205, für die die Zugriffsberechtigungsinformation den Benutzer 211 zum Zugriff berechtigt, eine Steuerinformation gesendet werden (z.B. über einen oder mehrere der Kommunikationspfade 215, 216 und 217 durch die Kommunikationsschnittstelle 104 der Steuervorrichtung 100), die eingerichtet ist, die jeweilige Sendungshalterung zu veranlassen, das Überwachen zu unterbrechen (z.B. bis der Benutzer eine Sendung in der jeweiligen Sendungshalterung hinterlegt oder daraus entnommen hat). Die jeweiligen Sendungshalterungen der Sendungshalterungen 203, 204 und 205 können dann entsprechend zumindest teilweise abhängig von Sensorinformationen, wie oben für die Steuervorrichtung 100 im Detail offenbart, bestimmen, ob der Benutzer 211 auf sie zugreift und beispielsweise, wenn bestimmt wird, dass ein (z.B. unberechtigter) Zugriff stattfindet, eine Zugriffsinformation an die Steuervorrichtung 100 senden (z.B. über einen der Kommunikationspfade 215, 216 und 217), die eine Information enthält und/oder repräsentiert, dass ein (z.B. unberechtigter) Zugriff auf die jeweilige Sendungshalterung stattfindet.

Solange in Schritt 305 nicht bestimmt wird, dass ein unberechtigter Zugriff des Benutzers 211 stattfindet (d.h. der Benutzer 211 nur auf die eine oder mehreren der Sendungshalterungen zugreift, für die die Zugriffsberechtigungsinformation den Benutzer 211 zum Zugriff berechtigt) und eine Präsenz des Benutzers 211 in dem Aufbewahrungsraum 202 beispielsweise erfassbar ist, wird das Überwachen in Schritt 305 fortgesetzt. Wenn eine Präsenz des Benutzers 211 in dem Aufbewahrungsraum 202 nicht erfassbar ist (z.B. weil der Benutzer 211 den Aufbewahrungsraum 202 verlassen hat, nachdem er eine Sendung hinterlegt oder abgeholt hat), ohne dass in Schritt 305 bestimmt wird, dass ein unberechtigter Zugriff des Benutzers 211 stattfindet, wird das Flussdiagramm 300 in einem optionalen Schritt 306 beispielsweise beendet und die Tür 208 geschlossen. Ob eine Präsenz des Benutzers 211 in dem Aufbewahrungsraum 202 erfassbar ist, kann beispielsweise zumindest teilweise abhängig von von der Videokamera 209 an der Steuervorrichtung empfangenen (z.B. über den Kommunikationspfad 213 durch die Kommunikationsschnittstelle 104 der Steuervorrichtung 100) Sensorinformationen bestimmt werden, die ein oder mehrere durch die Videokamera 209 erfasste Bilder des Aufbewahrungsraums 202 oder eines Teils des Autbewahrungsraums repräsentieren und/oder enthalten.

Wenn in Schritt 305 jedoch bestimmt wird, dass ein unberechtigter Zugriff des Benutzers 211 stattfindet (d.h. der Benutzer 211 auf eine oder mehrere der Sendungshalterungen zugreift, für die die Zugriffsberechtigungsinformation den Benutzer 211 nicht zum Zugriff berechtigt), wird das Flussdiagramm mit einem optionalen Schritt 307 fortgesetzt.

In einem optionalen Schritt 307 wird eine erste Alarmaktion ausgelöst und/oder das Auslösen der ersten Alarmaktion bewirkt.

Beispielsweise ist die erste Alarmaktion eine lokale Alarmaktion, die durch den Benutzer 211 in dem Aufbewahrungsraum 202 und/oder in einer Umgebung der Garage 201 wahrnehmbar ist (z.B. akustisch und/oder optisch wahrnehmbar ist). Dementsprechend soll unter dem Auslösen der ersten Alarmaktion das Ausgeben eines durch einen Benutzer 211 in dem Aufbewahrungsraum 202 und/oder in einer Umgebung der Garage 201 wahrnehmbaren Signals verstanden werden. Zum Beispiel kann in Schritt 307 ein optisches Signal durch den optischen Signalgeber 210, der in dem Aufbewahrungsraum 202 angeordnet ist, ausgegeben werden.

Das Bewirken des Auslösens der ersten Alarmaktion kann beispielsweise durch das Ansteuern des optischen Signalgebers 210 erfolgen, um den optischen Signalgeber 210 zu veranlassen, ein optisches Signal auszugeben. Zum Beispiel wird in Schritt 307 eine entsprechende Steuerinformation, die eingerichtet ist, den optischen Signalgeber 210 zu veranlassen, ein optisches Signal auszugeben, an den optischen Signalgeber 210 gesendet (z.B. über den Kommunikationspfad 214 durch die Kommunikationsschnittstelle 104 der Steuervorrichtung 100).

In einem optionalen Schritt 308 wird nach Ablauf eines vorgegebenen Zeitraums nach dem Auslösen und/oder Bewirken des Auslösens der ersten Alarmaktion bestimmt, ob der Benutzer 211 weiterhin unberechtigt auf die zumindest eine Sendungshalterung der Sendungshalterungen zugreift. Dabei kann das Bestimmen, ob der Benutzer 211 weiterhin unberechtigt auf die zumindest eine Sendungshalterung der Sendungshalterungen 203, 204, und 205 zugreift, beispielsweise entsprechend dem im Zusammenhang mit Schritt 305 offenbarten Bestimmen ablaufen.

Wenn der Benutzer 211 den unberechtigten Zugriff beendet und/oder rückgängig macht und eine Präsenz des Benutzers 211 in dem Aufbewahrungsraum 202 beispielsweise erfassbar ist, wird das Flussdiagramm mit

Schritt 305 fortgesetzt. Wenn der Benutzer 211 den unberechtigten Zugriff beendet und/oder rückgängig macht und eine Präsenz des Benutzers 211 in dem Aufbewahrungsraum 202 nicht erfassbar ist (z.B. weil der Benutzer 211 den Aufbewahrungsraum 202 verlassen hat, wird das Flussdiagramm 300 in Schritt 308 beispielsweise beendet und die Tür 208 geschlossen. Wie oben offenbart, kann beispielsweise zumindest teilweise abhängig von von der Videokamera 209 an der Steuervorrichtung empfangenen (z.B. über den Kommunikationspfad 213 durch die Kommunikationsschnittstelle 104 der Steuervorrichtung 100) Sensorinformationen bestimmt werden, ob eine Präsenz des Benutzers 211 in dem Aufbewahrungsraum 202 erfassbar ist.

Wenn in Schritt 308 bestimmt wird, dass der Benutzer 211 nach Ablauf des vorgegebenen Zeitraums nach dem Auslösen und/oder Bewirken des Auslösens der ersten Alarmaktion weiterhin unberechtigt auf die zumindest eine Sendungshalterung der Sendungshalterungen zugreift, wird in einem optionalen Schritt 309 eine zweite Alarmaktion ausgelöst und/oder das Auslösen der zweiten Alarmaktion bewirkt.

Zum Beispiel umfasst die zweite Alarmaktion das Benachrichtigen und/oder das Bewirken des Benachrichtigens eines oder mehrerer weiterer Benutzer und/oder das Protokollieren und/oder das Bewirken des Protokollierens des unberechtigten Zugriffs.

Das Benachrichtigen eines oder mehrerer weiterer Benutzer (z.B. eines oder mehrerer weiterer Benutzer der Sendungsaufbewahrungsvorrichtung) erfolgt beispielsweise durch das Senden einer Nachricht (z.B. eine Sprachnachricht, eine Textnachricht und/oder eine Emailnachricht) an die weiteren Benutzer und/oder an jeweilige Benutzervorrichtungen (z.B. tragbare Benutzervorrichtungen) der weiteren Benutzer. Dabei soll eine Nachricht als an einen Benutzer und/oder an eine Benutzervorrichtung des Benutzers gesendet verstanden werden, wenn die Nachricht an eine dem Benutzer zugeordnete Nachrichtenadresse (z.B. eine Emailadresse und/oder eine Telefonnummer) und/oder an eine dem Benutzer zugeordnete Benutzervorrichtung (z.B. an eine Netzwerkadresse wie eine IP (Internet Protokoll)-Adresse der dem Benutzer zugeordneten Benutzervorrichtung) gesendet (z.B. durch die Kommunikationsschnittstelle 104 der Steuervorrichtung 100) wird. Zum Beispiel sind die weiteren Benutzer ebenfalls bei dem Zustelldienst zur Abholung und Hinterlegung von Sendungen in der Garage 201 registriert. Entsprechende Informationen (z.B. Informationen, die eine Nachrichtenadresse der weiteren registrierten Benutzer repräsentieren) können beispielsweise in der Benutzerdatenbank gespeichert sein.

Das Protokollieren des Zugriffs kann beispielsweise durch das Speichern von Protokollinformationen erfolgen, die die in Schritt 301 erhaltene Zugriffsberechtigungsinformation repräsentieren und/oder enthalten. Ferner können die Protokollinformationen beispielsweise einen Zeitstempel (z.B. eine Angabe des Zeitpunkts des unberechtigten Zugriffs) und/oder Sensorinformationen wie Sensorinformationen (z.B. Sensorinformationen, die einen oder mehrere Sendungshalterungsparameter und/oder einen oder mehrere Aufbewahrungsraumparameter enthalten und/oder repräsentieren) enthalten und/oder repräsentieren. Die Protokollinformationen können beispielsweise in einer Protokolldatenbank in Programmspeicher 102 der Steuervorrichtung 100 gespeichert werden.

Das Bewirken des Benachrichtigens und/oder das Bewirken des Protokollierens soll derart verstanden werden, dass eine (oder mehrere) von der Steuervorrichtung separate Vorrichtung(en) veranlasst werden, das Benachrichtigen und/oder Protokollieren auszuführen (z.B. indem die Steuervorrichtung entsprechend eingerichtete Steuerinformationen an die separaten Vorrichtungen sendet).

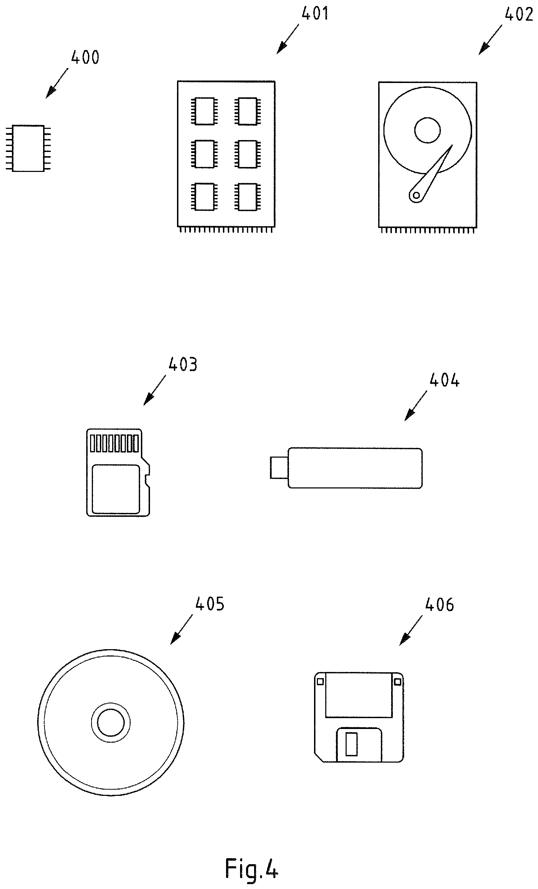

Fig. 4 zeigt schließlich beispielhafte Ausführungsformen von Speichermedien, auf denen ein Ausführungsbeispiel eines offenbarten Computerprogramms gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessors 101 der Steuervorrichtung 100 aus Fig. 1) sein, beispielsweise ein (nicht-flüchtiger oder flüchtiger) Programmspeicher des Prozessors oder ein Teil davon (z.B. Programmspeicher 102). Ausführungsbeispiele eines Speichermediums sind ein Flash-Speicher 400, eine SSD-Festplatte 401, eine magnetische Festplatte 402, eine Speicherkarte 403, ein Memory Stick 404 (z.B. ein USB-Stick), eine CD-ROM oder DVD 405 oder eine Diskette 406.

Die in dieser Spezifikation beschriebenen beispielhaften Ausführungsformen der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Flussdiagrammen ist nicht zwingend, alternative Abfolgen der Verfahrensschritte sind denkbar - soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren für eine Sendungsaufbewahrungsvorrichtung (201), wobei die Sendungsaufbewahrungsvorrichtung (201) einen Aufbewahrungsraum (202) umfasst, und wobei in dem Aufbewahrungsraum (202) eine Mehrzahl von Sendungshalterungen (203-205) angeordnet ist, das Verfahren umfassend:
- Erhalten (301) einer Zugriffsberechtigungsinformation, wobei die Zugriffsberechtigungsinformation einen Benutzer (211) zum Zugriff auf eine oder mehrere der Sendungshalterungen (203-205) berechtigt,
- Bestimmen (302), ob ein Zugriff des Benutzers (211) auf eine oder mehrere der Sendungshalterungen (203-205) gewährt werden darf, zumindest teilweise in Abhängigkeit der erhaltenen Zugriffsberechtigungsinformation,
- nur dann, wenn bestimmt (303) wurde, dass ein Zugriff des Benutzers (211) auf eine oder mehrere der Sendungshalterungen (203-205) gewährt werden darf:
- Gewähren oder Bewirken des Gewährens (304) eines Zugangs für den Benutzer (211) zu dem Aufbewahrungsraum (202) und
- Bestimmen oder Bewirken des Bestimmens (305), ob der Benutzer (211) nur auf die eine oder mehreren der Sendungshalterungen (203-205) zugreift, für die die Zugriffsberechtigungsinformation den Benutzer (211) zum Zugriff berechtigt.

2. Verfahren nach Anspruch 1, wobei die Zugriffsberechtigungsinformation von einer tragbaren Benutzervorrichtung (212) empfangen wird.

3. Verfahren nach einem der Ansprüche 1 und 2, wobei die Zugriffsberechtigungsinformation eine der folgenden Zugriffsberechtigungsinformationen ist:
- eine Zugriffsberechtigungsinformation zur Abholung zumindest einer Sendung (206, 207),
- eine Zugriffsberechtigungsinformation zur Hinterlegung zumindest einer Sendung.

4. Verfahren nach einem der Ansprüche 1 bis 3, wobei die Sendungsaufbewahrungsvorrichtung (201) ein Gebäude und/oder ein Teil eines Gebäudes ist, und wobei der Aufbewahrungsraum (202) ein Raum des Gebäudes ist.

5. Verfahren nach einem der Ansprüche 1 bis 4, wobei der Zugang für den Benutzer (211) zu dem Aufbewahrungsraum (202) durch das Entriegeln und/oder Öffnen einer Tür (208) der Sendungsaufbewahrungsvorrichtung (201) gewährt wird.

6. Verfahren nach einem der Ansprüche 1 bis 5, wobei das Bestimmen, ob der Benutzer (211) nur auf die eine oder mehreren der Sendungshalterungen (203-205) zugreift, für die die Zugriffsberechtigungsinformation den Benutzer (211) zum Zugriff berechtigt, zumindest teilweise auf Sensorinformationen basiert.

7. Verfahren nach Anspruch 6, wobei die Sensorinformationen einen oder mehrere durch einen oder mehrere in dem Aufbewahrungsraum (202) angeordnete Sensoren (209) und/oder durch einen oder mehrere Sensoren der Sendungshalterungen (203-205) erfassten Parameter repräsentieren.

8. Verfahren nach einem der Ansprüche 6 und 7, wobei jede der Sendungshalterungen (203-205) zumindest einen Sensor umfasst, und wobei der jeweilige Sensor eingerichtet ist zumindest einen der folgenden Sendungshalterungsparameter zu erfassen:
- ein Gewicht einer durch die jeweilige Sendungshalterung gehaltenen Sendung (206, 207),
- eine Erschütterung der jeweiligen Sendungshalterung (203-205),
- ein Öffnen- und/oder Schließen eines Verschlussmittels der jeweiligen Sendungshalterung (203-205),
- eine Beschädigung der jeweiligen Sendungshalterung (203-205) und/oder eines Teils der Sendungshalterung (203-205),
- eine Kennzeichnung einer durch die jeweilige Sendungshalterung (203-205) gehaltenen Sendung (206, 207).

9. Verfahren nach einem der Ansprüche 1 bis 8, ferner umfassend:
- wenn bestimmt (306) wird, dass der Benutzer (211) unberechtigt auf zumindest eine Sendungshalterung der Sendungshalterungen (203-205) zugreift, für die die Zugriffsberechtigungsinformation den Benutzer (211) nicht zum Zugriff berechtigt, Auslösen und/oder Bewirken des Auslösens (307) einer ersten Alarmaktion.

10. Verfahren nach Anspruch 9, ferner umfassend:
- wenn bestimmt (308) wird, dass der Benutzer (211) nach Ablauf eines vorgegebenen Zeitraums nach dem Auslösen und/oder Bewirken des Auslösens der ersten Alarmaktion weiterhin unberechtigt auf die zumindest eine Sendungshalterung der Sendungshalterungen (203-205) zugreift, Auslösen und/oder Bewirken des Auslösens (309) einer zweiten Alarmaktion.

11. Verfahren nach Anspruch 10, wobei die zweite Alarmaktion das Benachrichtigen und/oder das Bewirken des Benachrichtigens einer oder mehrerer weiterer Benutzer (211) und/oder das Protokollieren und/oder das Bewirken des Protokollierens des unberechtigten Zugriffs umfasst.

12. Verfahren nach einem der Ansprüche 9 bis 11, wobei die erste Alarmaktion durch einen Signalgeber (210) der Sendungsaufbewahrungsvorrichtung (201), insbesondere einen akustischen und/oder optischen Signalgeber, ausgeführt wird.

13. Computerprogramm, umfassend Programmanweisungen, die einen Prozessor (101) zur Ausführung und/oder Steuerung des Verfahrens gemäß einem der Ansprüche 1 bis 12 veranlassen, wenn das Computerprogramm auf dem Prozessor (101) läuft.

14. Steuervorrichtung (100), umfassend:
- Mittel (101-105) eingerichtet zur Ausführung des Verfahrens nach einem der Ansprüche 1 bis 12 oder umfassend jeweilige Mittel (101-105) zur Ausführung der Schritte des Verfahrens nach einem der Ansprüche 1 bis 12.

15. System, umfassend:
- eine Sendungsaufbewahrungsvorrichtung (201), wobei die Sendungsaufbewahrungsvorrichtung (201) einen Aufbewahrungsraum (202) umfasst, und wobei in dem Aufbewahrungsraum (202) eine Mehrzahl von Sendungshalterungen (203-205 angeordnet sind, und
- eine Steuervorrichtung (100) nach Anspruch 14.
